# EUROPEAN PATENT APPLICATION

(11) **EP 4 622 367 A1**
(43) Date of publication of application: **24.09.2025**
(21) Application number: 23905618.7
(22) Date of filing: 27.11.2023
(51) Int. Cl.: H04W 72/04

(54) **COMMUNICATION METHOD AND APPARATUS, READABLE STORAGE MEDIUM, AND CHIP SYSTEM**

(30) Priority: 20.12.2022 CN 202211643245
(71) Applicant: Huawei Technologies Co., Ltd., Shenzhen, Guangdong 518129 (CN)
(72) Inventor: SHI, Meng, Shenzhen, Guangdong 518129 (CN); LIAO, Shuri, Shenzhen, Guangdong 518129 (CN); DOU, Shengyue, Shenzhen, Guangdong 518129 (CN)
(74) Representative: Thun, Clemens
(86) International application number: PCT/CN2023/134350
(87) International publication number: WO 2024/131450

(57) **Abstract**

This application provides a communication method and apparatus, a readable storage medium, and a chip system, to resolve a problem that a maximum quantity of candidate SSBs cannot be dynamically adjusted. In this application, a terminal device receives a configuration message from a network device, where the configuration message includes first indication information, the first indication information indicates a maximum quantity of candidate synchronization/physical broadcast channel blocks (SSB), and the terminal device performs initial access based on the maximum quantity of candidate SSBs.

## Description

### TECHNICAL FIELD

This application relates to the field of communication technologies, and in particular, to a communication method and apparatus, a readable storage medium, and a chip system.

### BACKGROUND

To support wider service coverage, a network device needs a larger communication area to provide a network service. For example, in a non-terrestrial network (Non-Terrestrial Networks, NTN) system, a network device (for example, a satellite, a high-altitude platform, or a base station) generally can cover a large area. With a given link budget and system resources, the network side needs to improve a coverage capability of a single beam through beam design. Because a coverage area of a single beam is limited, a network device needs to add a large quantity of beams to complete full coverage. Therefore, a related technology for a beam addition scenario needs to be further studied, for example, a related technology of a synchronization/physical broadcast channel block (synchronization/physical broadcast channel block, SSB).

### SUMMARY

Embodiments of this application provide a communication method and apparatus, a readable storage medium, and a chip system, to resolve a problem that a maximum quantity of candidate SSBs cannot be dynamically adjusted.

According to a first aspect of embodiments of this application, a communication method is provided. The method may be performed by a terminal device or a unit, a module, or a chip in the terminal device. In this embodiment of this application, a first terminal device is used as an example for description. The method includes: A first terminal device receives a configuration message from a network device, where the configuration message includes first indication information, the first indication information indicates a maximum quantity of candidate synchronization/physical broadcast channel blocks (SSB), and the first terminal device performs initial access based on the maximum quantity of candidate SSBs.

Based on the method, the first terminal device may dynamically obtain the maximum quantity of candidate SSBs based on the received configuration message, so that the first terminal device may perform initial access based on the latest maximum quantity of candidate SSBs, avoiding an increased initial access delay or even failed initial access due to failure to dynamically adjust the maximum quantity of candidate SSBs.

With reference to the first aspect, in a possible implementation of the first aspect, performing initial access based on the maximum quantity of candidate SSBs includes: The first terminal device determines the maximum quantity of candidate SSBs, the first terminal device updates an SSB search periodicity based on the maximum quantity of candidate SSBs, and then the first terminal device may search for the SSB based on an updated SSB search periodicity, to complete initial access.

With reference to the first aspect, in a possible implementation of the first aspect, the configuration information is information carried on a physical broadcast channel (PBCH), and the first indication information is represented by a part of bits carried on the PBCH.

Based on the method, the first indication information that indicates the maximum quantity of candidate SSBs may be represented by reusing a part of bits carried on the PBCH, to avoid additional signaling for transmitting the first indication information, reducing overheads.

With reference to the first aspect, in a possible implementation of the first aspect, the first indication information is represented by a first bit. The first bit includes 1 bit, 2 bits, or 3 bits, the first bit is one or more of 4 bits [*a̅A̅*₊₄, a̅_{*̅A̅*̅+5}, a̅_{*̅A̅*̅+6}, a̅_{*̅A̅*̅+7}] carried on the PBCH, *a̅*_{*A̅*+4} is a half-frame bit carried on the PBCH, and a̅_{*̅A̅*̅+5}, a̅_{*̅A̅*̅+6}, and a̅_{*̅A̅*̅+7} are most significant bits of an SSB index carried on the PBCH.

Based on the method, the first indication information that indicates the maximum quantity of candidate SSBs may be represented by reusing a part of bits [a_{*A̅*+4}, a_{*A̅*+5}, a_{*A̅*+6}, a_{*A̅*+7}] carried on the PBCH, to avoid additional signaling for transmitting the first indication information, reducing overheads.

With reference to the first aspect, in a possible implementation of the first aspect, the configuration information further includes second indication information, and the second indication information indicates the SSB index. The second indication information includes M bits, where a 1^{st} least significant bit (LSB), a 2^{nd} LSB, and a 3^{rd} LSB of the second indication information are represented by a demodulation reference signal (DMRS) sequence carried on the PBCH, a 1^{st} most significant bit (MSB) to an (M-3)^{th} MSB of the second indication information are represented by a second bit carried on the PBCH, and the second bit includes one or more bits of a system frame number (SFN) carried on the PBCH and/or a half-frame bit carried on the PBCH.

Based on the method, a method for representing the SSB index may dynamically change with the maximum quantity of candidate SSBs, so that the first terminal device can dynamically receive information about the SSB index.

With reference to the first aspect, in a possible implementation of the first aspect, the first indication information and the second indication information are related to a quantity of bits of the first indication information, a quantity of bits of the second indication information, and a pattern of the SSBs.

With reference to the first aspect, in a possible implementation of the first aspect, that the first indication information and the second indication information are related to a quantity of bits of the first indication information, a quantity of bits of the second indication information, and a pattern of the SSBs includes:
when the quantity of bits of the first indication information is 1 bit, the pattern of the SSBs is that there are eight candidate SSB locations within 20 milliseconds (ms), and the quantity M of bits of the second indication information is 8 bits, the first indication information is represented as [Y], and 5 most significant bits of the second indication information are represented as [X3, X2, X1, a̅_{*̅A̅*̅+1}, a̅_{*̅A̅*̅+2}], where Y, X1, X2, and X3 are different bits in [*a̅*_{*A̅*+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 20 milliseconds (ms), and the quantity M of bits of the second indication information is 7 bits, the first indication information is represented as [Y], and 4 most significant bits of the second indication information are represented as [X2, X1, a̅_{*̅A̅*̅+1}, a̅_{*̅A̅*̅+2}], where Y, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+5}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 20 milliseconds (ms), and the quantity M of bits of the second indication information is 6 bits, the first indication information is represented as [Y], and 3 most significant bits of the second indication information are represented as [X1, a̅_{*̅A̅*̅+1}, a̅_{*̅A̅*̅+2}], where Y and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 10 milliseconds (ms), and the quantity M of bits of the second indication information is 8 bits, the first indication information is represented as [Y], and 5 most significant bits of the second indication information are represented as [X2, X1, a̅_{*̅A̅*̅+1}, a̅_{*̅A̅*̅+2}, X3], where Y, X1, X2, and X3 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 10 milliseconds (ms), and the quantity M of bits of the second indication information is 7 bits, the first indication information is represented as [Y], and 4 most significant bits of the second indication information are represented as [X2, a̅_{*̅A̅*̅+1}, a̅_{*̅A̅*̅+2}, X1], where Y, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 10 milliseconds (ms), and the quantity M of bits of the second indication information is 6 bits, the first indication information is represented as [Y], and 3 most significant bits of the second indication information are represented as [a̅_{*̅A̅*̅+1}, a̅_{*̅A̅*̅+2}, X1], where Y and X1 are different bits in [a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 5 milliseconds (ms), and the quantity M of bits of the second indication information is 8 bits, the first indication information is represented as [Y], and 5 most significant bits of the second indication information are represented as [X2, a̅_{*̅A̅*̅+1}, a̅_{*̅A̅*̅+2}, X1, a̅_{*̅A̅*̅+4]}, where Y, X1, and X2 are different bits in [a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 5 milliseconds (ms), and the quantity M of bits of the second indication information is 7 bits, the first indication information is represented as [Y], and 4 most significant bits of the second indication information are represented as [a̅_{*̅A̅*̅+1}, a̅_{*̅A̅*̅+2}, X1, a̅_{*̅A̅*̅+4}], where Y and X1 are different bits in [a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH; or
when the quantity of bits of the first indication information is 1 bit, the pattern of the SSBs is that there are eight candidate SSB locations within 5 milliseconds (ms), and the quantity M of bits of the second indication information is 6 bits, the first indication information is represented as [Y], and 3 most significant bits of the second indication information are represented as [a̅_{*̅A̅*̅+2}, X1, a̅_{*̅A̅*̅+4}], where Y and X1 are different bits in [a̅_{*̅A̅*̅+5}, a̅_{*̅A̅*̅+6}, a̅_{*̅A̅*̅+7}] carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

With reference to the first aspect, in a possible implementation of the first aspect, that the first indication information and the second indication information are related to a quantity of bits of the first indication information, a quantity of bits of the second indication information, and a pattern of the SSBs further includes:
when the quantity of bits of the first indication information is 2 bits, the pattern of the SSBs is that there are eight candidate SSB locations within 20 milliseconds (ms), and the quantity M of bits of the second indication information is 8 bits, the first indication information is represented as [Y1, Y2], and 6 most significant bits of the second indication information are represented as [X2, X1, a̅*̅_̅{̅A̅}̅*̅, a̅_{*̅A̅*̅+1}, a̅_{*̅A̅*̅+2}], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅*̅A̅*̅₊₁ is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 20 milliseconds (ms), and the quantity M of bits of the second indication information is 7 bits, the first indication information is represented as [Y1, Y2], and 4 most significant bits of the second indication information are represented as [X2, X1, a̅_{*̅A̅*̅+1}, a̅_{*̅A̅*̅+2}], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 20 milliseconds (ms), and the quantity M of bits of the second indication information is 6 bits, the first indication information is represented as [Y1, Y2], and 3 most significant bits of the second indication information are represented as [X1, a̅_{*̅A̅*̅+1}, a̅_{*̅A̅*̅+2}], where Y1, Y2, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 10 milliseconds (ms), and the quantity M of bits of the second indication information is 9 bits, the first indication information is represented as [Y1, Y2], and 6 most significant bits of the second indication information are represented as [X2, X1, a̅*̅_̅{̅A̅}̅*̅, a̅_{*̅A̅*̅+1}, a̅_{*̅A̅*̅+2}, a̅_{*̅A̅*̅+3}], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+3} is a 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 10 milliseconds (ms), and the quantity M of bits of the second indication information is 8 bits, the first indication information is represented as [Y1, Y2], and 5 most significant bits of the second indication information are represented as [X1, a̅*̅_̅{̅A̅}̅*̅, a̅_{*̅A̅*̅+1}, a̅_{*̅A̅*̅+2}, a̅_{*̅A̅*̅+3}], where Y1, Y2, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+3} is a 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 10 milliseconds (ms), and the quantity M of bits of the second indication information is 7 bits, the first indication information is represented as [Y1, Y2], and 4 most significant bits of the second indication information are represented as [X2, a̅_{*̅A̅*̅+1}, a̅_{*̅A̅*̅+2}, X1], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, a̅_{*̅A̅*̅+7} are the most significant bits of the SSB index carried on the PBCH;
when the quantity of bits of the first indication information is 2 bits, the pattern of the SSBs is that there are eight candidate SSB locations within 10 milliseconds (ms), and the quantity M of bits of the second indication information is 6 bits, the first indication information is represented as [Y1, Y2], and 3 most significant bits of the second indication information are represented as [a̅_{*̅A̅*̅+1}, a̅_{*̅A̅*̅+2}, X1], where Y1, Y2, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 5 milliseconds (ms), and the quantity M of bits of the second indication information is 9 bits, the first indication information is represented as [Y1, Y2], and 6 most significant bits of the second indication information are represented as [X1, a̅*̅_̅{̅A̅}̅*̅, a̅_{*̅A̅*̅+1}, a̅_{*̅A̅*̅+2}, a̅_{*̅A̅*̅+3}, a̅_{*̅A̅*̅+4]}, where Y1, Y2, and X1 are different bits in [a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+3} is a 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 5 milliseconds (ms), and the quantity M of bits of the second indication information is 8 bits, the first indication information is represented as [Y1, Y2], and 5 most significant bits of the second indication information are represented as [X1, a̅_{*̅A̅*̅+1}, a̅_{*̅A̅*̅+2}, a̅_{*̅A̅*̅+3}, a̅_{*̅A̅*̅+4]}, where Y1 and Y2 are different bits in [a̅_{*̅A̅*̅+5}, a̅_{*̅A̅*̅+6}, a̅_{*̅A̅*̅+7}] carried on the PBCH, X1 is a bit different from Y1 and Y2 in [a̅*̅_̅{̅A̅}̅*̅, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+3} is a 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 5 milliseconds (ms), and the quantity M of bits of the second indication information is 7 bits, the first indication information is represented as [Y1, Y2], and 4 most significant bits of the second indication information are represented as [a̅_{*̅A̅*̅+1}, a̅_{*̅A̅*̅+2}, X1, a̅_{*̅A̅*̅+4}], where Y1, Y2, and X1 are different bits in [*a*_{*A̅*+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH; or
when the quantity of bits of the first indication information is 2 bits, the pattern of the SSBs is that there are eight candidate SSB locations within 5 milliseconds (ms), and the quantity M of bits of the second indication information is 6 bits, the first indication information is represented as [Y1, Y2], and 3 most significant bits of the second indication information are represented as [a̅_{*̅A̅*̅+2}, X1, a̅_{*̅A̅*̅+4]}, where Y1, Y2, and X1 are different bits in [*a*_{*A̅*+5}, a̅_{*̅A̅*̅+6}, a̅_{*̅A̅*̅+7}] carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

With reference to the first aspect, in a possible implementation of the first aspect, that the first indication information and the second indication information are related to a quantity of bits of the first indication information, a quantity of bits of the second indication information, and a pattern of the SSBs includes:
when the quantity of bits of the first indication information is 3 bits, the pattern of the SSBs is that there are eight candidate SSB locations within 20 milliseconds (ms), and the quantity M of bits of the second indication information is 7 bits, the first indication information is represented as [Y1, Y2, Y3], and 4 most significant bits of the second indication information are represented as [X1, a̅*̅_̅{̅A̅}̅*̅, a̅_{*̅A̅*̅+1}, a̅_{*̅A̅*̅+2}], where Y1, Y2, Y3, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, a̅_{*̅A̅*̅+7} are the most significant bits of the SSB index carried on the PBCH; or
when the quantity of bits of the first indication information is 3 bits, the pattern of the SSBs is that there are eight candidate SSB locations within 20 milliseconds (ms), and the quantity M of bits of the second indication information is 6 bits, the first indication information is represented as [Y1, Y2, Y3], and 3 most significant bits of the second indication information are represented as [X1, a̅_{*̅A̅*̅+1}, a̅_{*̅A̅*̅+2}], where Y1, Y2, Y3, and X1 are different bits in [*a̅*_{*A̅*+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

With reference to the first aspect, in a possible implementation of the first aspect, performing initial access based on the maximum quantity of candidate SSBs includes: The terminal device performs initial access based on a first maximum quantity of candidate SSBs; and the terminal device determines a second maximum quantity of candidate SSBs based on the first indication information, and then performs initial access based on the second maximum quantity of candidate SSBs.

With reference to the first aspect, in a possible implementation of the first aspect, the terminal device may determine the second maximum quantity of candidate SSBs through first descrambling or second descrambling.

With reference to the first aspect, in a possible implementation of the first aspect, the method further includes: The first terminal device receives an SSB set from the network device, where the SSB set includes a plurality of SSBs, and selects, from the SSB set, an SSB that ranks earlier in time and that meets a first threshold for decoding.

According to a second aspect of embodiments of this application, a communication method is provided. The method may be performed by a network device or a unit, a module, or a chip in the network device. In this embodiment of this application, a network device is used as an example for description. The method includes: A network device sends configuration information, where the configuration information includes first indication information, the first indication information indicates a maximum quantity of candidate synchronization/physical broadcast channel blocks (SSB), and the maximum quantity of candidate SSBs is used for initial access.

Based on the method, the network device may dynamically send information about the maximum quantity of candidate SSBs by sending a configuration message, so that initial access may be performed based on the latest maximum quantity of candidate SSBs, avoiding an increased initial access delay or even failed initial access due to failure to dynamically adjust the maximum quantity of candidate SSBs.

With reference to the second aspect, in a possible implementation of the second aspect, the configuration information is information carried on a physical broadcast channel (PBCH), and the first indication information is represented by a part of bits carried on the PBCH.

Based on the method, the first indication information that indicates the maximum quantity of candidate SSBs may be represented by reusing a part of bits carried on the PBCH, to avoid additional signaling for transmitting the first indication information, reducing overheads.

With reference to the second aspect, in a possible implementation of the second aspect, the first indication information is represented by a first bit. The first bit includes 1 bit, 2 bits, or 3 bits, the first bit is one or more of 4 bits [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+4} is a half-frame bit carried on the PBCH, and a̅_{*̅A̅*̅+5}, a̅_{*̅A̅*̅+6}, and a̅_{*̅A̅*̅+7} are most significant bits of an SSB index carried on the PBCH.

Based on the method, the first indication information that indicates the maximum quantity of candidate SSBs may be represented by reusing a part of bits [a_{*A̅*+4}, a̅_{*̅A̅*̅+5}, a̅_{*̅A̅*̅+6}, a_{*A̅*+7}] carried on the PBCH, to avoid additional signaling for transmitting the first indication information, reducing overheads.

With reference to the second aspect, in a possible implementation of the second aspect, the configuration information further includes second indication information, and the second indication information indicates the SSB index. The second indication information includes M bits, where a 1^{st} least significant bit (LSB), a 2^{nd} LSB, and a 3^{rd} LSB of the second indication information are represented by a demodulation reference signal (DMRS) sequence carried on the PBCH, a 1^{st} most significant bit (MSB) to an (M-3)^{th} MSB of the second indication information are represented by a second bit carried on the PBCH, and the second bit includes one or more bits of a system frame number (SFN) carried on the PBCH and/or a half-frame bit carried on the PBCH.

Based on the method, a method for representing the SSB index may dynamically change with the maximum quantity of candidate SSBs, so that a first terminal device can dynamically receive information about the SSB index.

With reference to the second aspect, in a possible implementation of the second aspect, the first indication information and the second indication information are related to a quantity of bits of the first indication information, a quantity of bits of the second indication information, and a pattern of the SSBs.

With reference to the second aspect, in a possible implementation of the second aspect, that the first indication information and the second indication information are related to a quantity of bits of the first indication information, a quantity of bits of the second indication information, and a pattern of the SSBs includes:
when the quantity of bits of the first indication information is 1 bit, the pattern of the SSBs is that there are eight candidate SSB locations within 20 milliseconds (ms), and the quantity M of bits of the second indication information is 8 bits, the first indication information is represented as [Y], and 5 most significant bits of the second indication information are represented as [X3, X2, X1, a̅_{*̅A̅*̅+1}, a̅_{*̅A̅*̅+2}], where Y, X1, X2, and X3 are different bits in [*a̅*_{*A̅*+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bits, the pattern of the SSBs is that there are eight candidate SSB locations within 20 milliseconds (ms), and the quantity M of bits of the second indication information is 7 bits, the first indication information is represented as [Y], and 4 most significant bits of the second indication information are represented as [X2, X1, a̅_{*̅A̅*̅+1}, a̅_{*̅A̅*̅+2}], where Y, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, a̅_{*̅A̅*̅+7} are the most significant bits of the SSB index carried on the PBCH;
when the quantity of bits of the first indication information is 1 bit, the pattern of the SSBs is that there are eight candidate SSB locations within 20 milliseconds (ms), and the quantity M of bits of the second indication information is 6 bits, the first indication information is represented as [Y], and 3 most significant bits of the second indication information are represented as [X1, a̅_{*̅A̅*̅+1}, a̅_{*̅A̅*̅+2}], where Y and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 10 milliseconds (ms), and the quantity M of bits of the second indication information is 8 bits, the first indication information is represented as [Y], and 5 most significant bits of the second indication information are represented as [X3, X2, a_{*A̅*+1}, a̅_{*̅A̅*̅+2}, X1], where Y, X1, X2, and X3 are different bits in [*a̅*_{*A̅*+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, a̅_{*̅A̅*̅+7} are the most significant bits of the SSB index carried on the PBCH;
when the quantity of bits of the first indication information is 1 bit, the pattern of the SSBs is that there are eight candidate SSB locations within 10 milliseconds (ms), and the quantity M of bits of the second indication information is 7 bits, the first indication information is represented as [Y], and 4 most significant bits of the second indication information are represented as [X2, a̅_{*̅A̅*̅+1}, a̅_{*̅A̅*̅+2}, X1], where Y, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 10 milliseconds (ms), and the quantity M of bits of the second indication information is 6 bits, the first indication information is represented as [Y], and 3 most significant bits of the second indication information are represented as [a̅_{*̅A̅*̅+1}, a̅_{*̅A̅*̅+2}, X1], where Y and X1 are different bits in [*a*_{*A̅*+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 5 milliseconds (ms), and the quantity M of bits of the second indication information is 8 bits, the first indication information is represented as [Y], and 5 most significant bits of the second indication information are represented as [X2, a̅_{*̅A̅*̅+1}, a̅_{*̅A̅*̅+2}, X1, a̅_{*̅A̅*̅+4}], where Y, X1, and X2 are different bits in [a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 1 bit, the pattern of the SSBs is that there are eight candidate SSB locations within 5 milliseconds (ms), and the quantity M of bits of the second indication information is 7 bits, the first indication information is represented as [Y], and 4 most significant bits of the second indication information are represented as [a̅_{*̅A̅*̅+1}, a̅_{*̅A̅*̅+2}, X1, a̅_{*̅A̅*̅+4}], where Y and X1 are different bits in [a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH; or
when the quantity of bits of the first indication information is 1 bit, the pattern of the SSBs is that there are eight candidate SSB locations within 5 milliseconds (ms), and the quantity M of bits of the second indication information is 6 bits, the first indication information is represented as [Y], and 3 most significant bits of the second indication information are represented as [a̅_{*̅A̅*̅+2}, X1, a̅_{*̅A̅*̅+4}], where Y and X1 are different bits in [a̅_{*̅A̅*̅+5}, a̅_{*̅A̅*̅+5}, a̅_{*̅A̅*̅+7}] carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

With reference to the second aspect, in a possible implementation of the second aspect, that the first indication information and the second indication information are related to a quantity of bits of the first indication information, a quantity of bits of the second indication information, and a pattern of the SSBs further includes:
when the quantity of bits of the first indication information is 2 bits, the pattern of the SSBs is that there are eight candidate SSB locations within 20 milliseconds (ms), and the quantity M of bits of the second indication information is 8 bits, the first indication information is represented as [Y1, Y2], and 6 most significant bits of the second indication information are represented as [X2, X1, a̅*̅_̅{̅A̅}̅*̅, a̅_{*̅A̅*̅+1}, a̅_{*̅A̅*̅+2}], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 20 milliseconds (ms), and the quantity M of bits of the second indication information is 7 bits, the first indication information is represented as [Y1, Y2], and 4 most significant bits of the second indication information are represented as [X2, X1, a̅_{*̅A̅*̅+1}, a̅_{*̅A̅*̅+2}], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 20 milliseconds (ms), and the quantity M of bits of the second indication information is 6 bits, the first indication information is represented as [Y1, Y2], and 3 most significant bits of the second indication information are represented as [X1, a̅_{*̅A̅*̅+1}, a̅_{*̅A̅*̅+2}], where Y1, Y2, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 10 milliseconds (ms), and the quantity M of bits of the second indication information is 9 bits, the first indication information is represented as [Y1, Y2], and 6 most significant bits of the second indication information are represented as [X2, X1, a̅*̅_̅{̅A̅}̅*̅, a̅_{*̅A̅*̅+1}, a̅_{*̅A̅*̅+2}, a̅_{*̅A̅*̅+3}], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+3} is a 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 10 milliseconds (ms), and the quantity M of bits of the second indication information is 8 bits, the first indication information is represented as [Y1, Y2], and 5 most significant bits of the second indication information are represented as [X1, a̅*̅_̅{̅A̅}̅*̅, a̅_{*̅A̅*̅+1}, a̅_{*̅A̅*̅+2}, a̅_{*̅A̅*̅+3}], where Y1, Y2, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+3} is a 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 10 milliseconds (ms), and the quantity M of bits of the second indication information is 7 bits, the first indication information is represented as [Y1, Y2], and 4 most significant bits of the second indication information are represented as [X2, a̅_{*̅A̅*̅+1}, a̅_{*̅A̅*̅+2}, X1], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 10 milliseconds (ms), and the quantity M of bits of the second indication information is 6 bits, the first indication information is represented as [Y1, Y2], and 3 most significant bits of the second indication information are represented as [a̅_{*̅A̅*̅+1}, a̅_{*̅A̅*̅+2}, X1], where Y1, Y2, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 5 milliseconds (ms), and the quantity M of bits of the second indication information is 9 bits, the first indication information is represented as [Y1, Y2], and 6 most significant bits of the second indication information are represented as [X1, a̅*̅_̅{̅A̅}̅*̅, a̅_{*̅A̅*̅+1}, a̅_{*̅A̅*̅+2}, a̅_{*̅A̅*̅+3}, a̅_{*̅A̅*̅+4]}, where Y1, Y2, and X1 are different bits in [a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+3} is a 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 5 milliseconds (ms), and the quantity M of bits of the second indication information is 8 bits, the first indication information is represented as [Y1, Y2], and 5 most significant bits of the second indication information are represented as [X1, a̅_{*̅A̅*̅+1}, a̅_{*̅A̅*̅+2}, a̅_{*̅A̅*̅+3}, a̅_{*̅A̅*̅+4]}, where Y1 and Y2 are different bits in [a̅_{*̅A̅*̅+5}, a̅_{*̅A̅*̅+6}, a̅_{*̅A̅*̅+7}] carried on the PBCH, X1 is a bit different from Y1 and Y2 in [a̅*̅_̅{̅A̅}̅*̅, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+3} is a 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH;
when the quantity of bits of the first indication information is 2 bits, the pattern of the SSBs is that there are eight candidate SSB locations within 5 milliseconds (ms), and the quantity M of bits of the second indication information is 7 bits, the first indication information is represented as [Y1, Y2], and 4 most significant bits of the second indication information are represented as [a̅_{*̅A̅*̅+1}, a̅_{*̅A̅*̅+2}, X1, a̅_{*̅A̅*̅+4}], where Y1, Y2, and X1 are different bits in [*a*_{*A̅*+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH; or
when the quantity of bits of the first indication information is 2 bits, the pattern of the SSBs is that there are eight candidate SSB locations within 5 milliseconds (ms), and the quantity M of bits of the second indication information is 6 bits, the first indication information is represented as [Y1, Y2], and 3 most significant bits of the second indication information are represented as [a̅_{*̅A̅*̅+2}, X1, a̅_{*̅A̅*̅+4}], where Y1, Y2, and X1 are different bits in [a̅_{*̅A̅*̅+5}, a̅_{*̅A̅*̅+6}, a̅_{*̅A̅*̅+7}] carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

With reference to the second aspect, in a possible implementation of the second aspect, that the first indication information and the second indication information are related to a quantity of bits of the first indication information, a quantity of bits of the second indication information, and a pattern of the SSBs includes:
when the quantity of bits of the first indication information is 3 bits, the pattern of the SSBs is that there are eight candidate SSB locations within 20 milliseconds (ms), and the quantity M of bits of the second indication information is 7 bits, the first indication information is represented as [Y1, Y2, Y3], and 4 most significant bits of the second indication information are represented as [X1, a̅*̅_̅{̅A̅}̅*̅, a̅_{*̅A̅*̅+1}, a̅_{*̅A̅*̅+2}], where Y1, Y2, Y3, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is a 4^{th} LSB of the SFN carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH; or
when the quantity of bits of the first indication information is 3 bits, the pattern of the SSBs is that there are eight candidate SSB locations within 20 milliseconds (ms), and the quantity M of bits of the second indication information is 6 bits, the first indication information is represented as [Y1, Y2, Y3], and 3 most significant bits of the second indication information are represented as [X1, a̅_{*̅A̅*̅+1}, a̅_{*̅A̅*̅+2}], where Y1, Y2, Y3, and X1 are different bits in a̅_{*̅A̅*̅+4}, a̅_{*̅A̅*̅+5}, a̅_{*̅A̅*̅+6}, a̅_{*̅A̅*̅+7}] carried on the PBCH, a̅*̅A̅*̅₊₁ is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

According to a third aspect of embodiments of this application, a communication apparatus is provided. The communication apparatus is the foregoing network device or terminal device (for example, the first terminal device). The apparatus may include a communication unit and a processing unit, to perform any implementation of any communication method in the first aspect and the second aspect. The communication unit is configured to perform functions related to sending and receiving. Optionally, the communication unit includes a receiving unit and a sending unit. In a design, the communication apparatus is a communication chip, and the communication unit may be an input/output circuit or a port of the communication chip.

In another design, the communication unit may be a transmitter and a receiver, or the communication unit is a transmitter machine and a receiver machine.

Optionally, the communication apparatus further includes modules that may be configured to perform any implementation of any communication method in the first aspect and the second aspect.

According to a fourth aspect of embodiments of this application, a communication apparatus is provided. The communication apparatus is the foregoing network device or terminal device (for example, the first terminal device). The apparatus may include a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is caused to perform any implementation of any communication method in the first aspect and the second aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a fifth aspect of embodiments of this application, a communication apparatus is provided. The communication apparatus is the foregoing network device or terminal device (for example, the first terminal device). The apparatus may include a processor. The processor is coupled to a memory, and may be configured to perform the method according to either of the first aspect and the second aspect and any possible implementation of the first aspect and the second aspect. Optionally, the communication apparatus further includes the memory. Optionally, the communication apparatus further includes a communication interface, and the processor is coupled to the communication interface.

In an implementation, the communication apparatus is a terminal device. When the communication apparatus is a terminal device, the communication interface may be a transceiver or an input/output interface. Optionally, the transceiver may be a transceiver circuit. Optionally, the input/output interface may be an input/output circuit.

In another implementation, the communication apparatus is a network device. When the communication apparatus is a network device, the communication interface may be a transceiver or an input/output interface. Optionally, the transceiver may be a transceiver circuit. Optionally, the input/output interface may be an input/output circuit.

In still another implementation, the communication apparatus is a chip or a chip system. When the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect of embodiments of this application, a computer-readable storage medium is provided. The computer-readable storage medium stores a computer program (which may also be referred to as code or instructions). When the computer program is run on a computer, the computer is caused to perform the method according to any possible implementation of the first aspect, or perform the method according to any implementation of the first aspect and the second aspect.

According to a seventh aspect of embodiments of this application, a computer program product is provided. The computer program product includes a computer program (which may also be referred to as code or instructions). When the computer program is run, a computer is caused to perform the method according to any possible implementation of the first aspect, or perform the method according to any implementation of the first aspect and the second aspect.

According to an eighth aspect of embodiments of this application, a chip system is provided. The chip system may include a processor. The processor is coupled to a memory, and may be configured to perform the method in either of the first aspect and the second aspect and any possible implementation of the first aspect and second aspect. Optionally, the chip system further includes a memory. The memory is configured to store a computer program (which may also be referred to as code or instructions). The processor is configured to invoke the computer program from the memory and run the computer program, to cause a device on which the chip system is installed to perform the method according to either of the first aspect and the second aspect and any possible implementation of the first aspect and the second aspect.

According to a ninth aspect of embodiments of this application, a processing apparatus is provided, including an input circuit, an output circuit, and a processing circuit. The processing circuit is configured to receive a signal by using the input circuit, and transmit a signal by using the output circuit, so that the method in either of the first aspect and the second aspect and any possible implementation of the first aspect and the second aspect are implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit serves as the input circuit and the output circuit at different moments. Specific implementations of the processor and various circuits are not limited in this application.

According to a tenth aspect of embodiments of this application, a communication system is provided. The communication system includes the foregoing network device and terminal device (for example, the first terminal device).

### BRIEF DESCRIPTION OF DRAWINGS

FIG. 1 is a diagram of a possible communication system according to an embodiment of this application;
FIG. 2 is a schematic flowchart of a communication method according to an embodiment of this application;
FIG. 3 is another schematic flowchart of a communication method according to an embodiment of this application;
FIG. 4 is a block diagram of scrambling and encoding bit information carried on a PBCH according to an embodiment of this application;
FIG. 5 is a block diagram of a time domain structure of a system frame according to an embodiment of this application;
FIG. 6 is a diagram of a structure of a terminal according to an embodiment of this application;
FIG. 7 is a diagram of a structure of an apparatus according to an embodiment of this application; and
FIG. 8 is a diagram of another apparatus according to an embodiment of this application.

### DESCRIPTION OF EMBODIMENTS

The following describes technical solutions of this application with reference to accompanying drawings.

It should be understood that sequence numbers of the processes do not mean execution sequences in embodiments of this application. The execution sequences of the processes should be determined according to functions and internal logic of the processes, and should not be construed as any limitation on the implementation processes of embodiments of this application.

It should be understood that, in embodiments of this application, the terms are generally numbered for ease of differentiation, and the numbering does not mean that the terms have a difference in order or priority. For example, in "first indication information" and "second indication information", "first" and "second" are usually used to distinguish only the two groups of information, and should not constitute a limitation on an implementation process of embodiments of this application.

It should be understood that in embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be single or plural.

It should be understood that, the term "and/or" in embodiments of this application describes only an association relationship between associated objects and represents that three relationships may exist. For example, A and/or B may represent the following three cases: Only A exists, both A and B exist, and only B exists. It should be understood that the character "/" in embodiments of this application generally indicates an "or" relationship between associated objects.

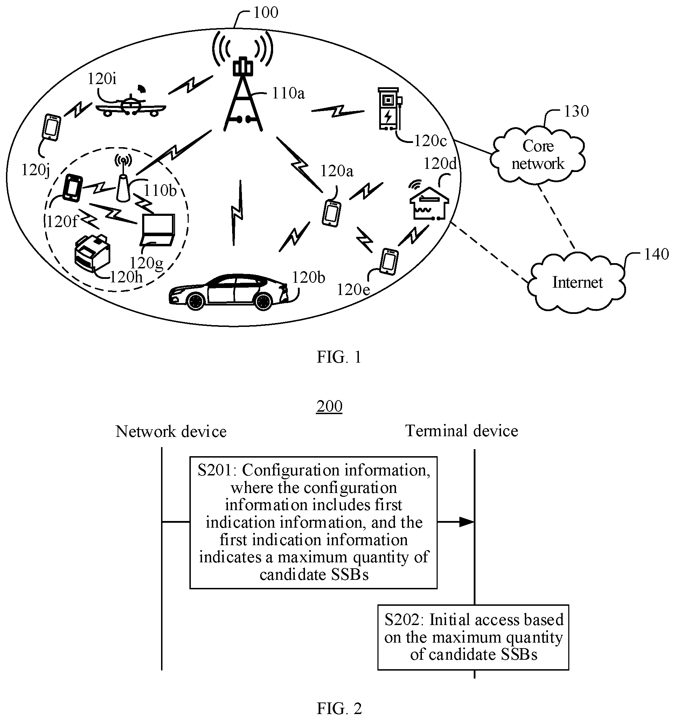

FIG. 1 is a diagram of an architecture of a communication system to which an embodiment of this application is applied. As shown in FIG. 1, the communication system includes a radio access network 100 and a core network 130. Optionally, the communication system may further include an internet 140. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless manner or a wired manner. A core network device and the network device may be different devices independent of each other; functions of the core network device and logical functions of the network device may be integrated into a same device; or some functions of the core network device and some functions of the network device may be integrated into one device. Terminals may be connected to each other in a wired or wireless manner, and network devices may be connected to each other in a wired or wireless manner. FIG. 1 is merely a diagram. The communication system may further include another network device, for example, may further include a relay device and a backhaul device, which are not shown in FIG. 1.

A method and an apparatus that are provided in embodiments of this application may be used in various communication systems, for example, a 4th generation (4th generation, 4G) communication system, a 4.5G communication system, a 5G communication system, a 5.5G communication system, a 6G communication system, a system integrating a plurality of communication systems, or a future evolved communication system, for example, a long term evolution (long term evolution, LTE) system, a new radio (new radio, NR) system, a wireless fidelity (wireless fidelity, Wi-Fi) system, a 3rd generation partnership project (3rd generation partnership project, 3GPP)-related communication system, and another communication system of this type.

The network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in a Wi-Fi system, a satellite, a high-altitude platform, or the like; or may be a module or a unit that implements some functions of the base station, for example, may be a central unit (central unit, CU), or may be a distributed unit (distributed unit, DU). The network device may be a macro base station (for example, 110a in FIG. 1), or may be a micro base station or an indoor base station (for example, 110b in FIG. 1), or may be a relay node, a donor node, or the like. It may be understood that, all or a part of functions of the network device in this application may alternatively be implemented via a software function running on hardware, or may be implemented via a virtualization function instantiated on a platform (for example, a cloud platform). A specific technology and a specific device form that are used by the network device are not limited in embodiments of this application. For ease of description, the following provides descriptions by using an example in which the base station serves as the network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine type communication (machine type communication, MTC), internet of things (internet of things, IoT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form used by the terminal are not limited in embodiments of this application.

Alternatively, the terminal in this application may be a VR terminal, an AR terminal, or an MR terminal. The VR terminal, the AR terminal, and the MR terminal each may be referred to as an XR terminal. The XR terminal may be, for example, a head mounted device (for example, a helmet or glasses), may be an all-in-one machine, or may be a television, a display, a car, a vehicle-mounted device, a tablet, or a smart screen. The XR terminal can present XR data to a user, and the user can experience diversified XR services by wearing or using the XR terminal. The XR terminal may access a network in a wireless or wired manner, for example, access the network through the Wi-Fi system, the 5G system, or another system.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other by using a radio air interface protocol. Certainly, communication between 110a and 120i may alternatively be performed based on an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a function of a base station, and 120a to 120j in FIG. 1 may be referred to as a communication apparatus having a function of a terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. A control subsystem that includes a base station function herein may be a control center in an application scenario of the foregoing terminal, such as a smart grid, an industrial control, a smart transportation, and a smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to the terminal, where the sidelink information is carried on a sidelink channel. The information may be control information, or may be data information.

With development of communication technologies, to support wider service coverage, a network device needs a larger communication area to provide a network service. Using an NTN system as an example, a network device (a satellite, a high-altitude platform, or a base station) in the NTN system can generally cover a large area. With a given link budget and system resources, the network device needs to improve a coverage capability of a single beam through beam design. Because a coverage area of a single beam is limited, the network device needs a large quantity of beams to complete full coverage, and a quantity of beams may be greater than 64, for example, 128, 256, or 512.

In an initial access phase, the network device needs to sequentially scan all beams, and configure a random resource for the terminal device. After being powered on, the terminal device needs to perform synchronization/physical broadcast channel block (synchronization/physical broadcast channel block, SSB) scanning, and determine an SSB pattern based on a frequency band and a subcarrier spacing. The SSB pattern defines a maximum quantity of candidate SSBs. The SSB is information first demodulated by the terminal device in an initial access process. The SSB mainly includes a primary synchronization signal (primary synchronization signal, PSS), a secondary synchronization signal (secondary synchronization signal, SSS), and a physical broadcast channel (physical broadcast channel, PBCH). The terminal device may complete cell synchronization and coarse symbol-level timing synchronization by demodulating the PSS and the SSS. The PBCH carries master information block (master information block, MIB) information configured by a higher layer. The terminal device may complete system framelevel timing synchronization by demodulating the MIB information, to obtain location information of a system information block 1 (system information block 1, SIB1).

However, as a service of the terminal device changes, a link budget changes, or for another reason, beams required by the network device to complete full coverage may increase or decrease. For example, in the NTN system, due to continuous satellite launching, a quantity of satellites increases, and a coverage range that needs to be covered by a single satellite may reduce. Therefore, fewer beams may be required from a single satellite. For example, beams required from the satellite may be reduced from 256 SSB beams to 128 SSB beams. In this case, because it is determined that the frequency band and the subcarrier spacing of the SSB pattern of the terminal device remain unchanged, the SSB pattern does not change, that is, the maximum quantity of candidate SSBs defined by the SSB pattern remains 256, and is not dynamically adjusted to 128. A larger maximum quantity of candidate SSBs corresponds to a longer SSB search periodicity and longer initial access delay. Therefore, failure to dynamically adjust the maximum quantity of SSBs causes an increased initial access delay, and even failed initial access. Embodiments of this application provide a communication method and apparatus, a readable storage medium, and a chip system, to dynamically adjust the maximum quantity of candidate SSBs.

For example, in the NTN system, the terminal device determines, based on frequency band detection and a subcarrier spacing, that a first maximum quantity of candidate SSBs is 256. Because a quantity of satellites or a service changes, the maximum quantity of candidate SSBs may be reduced. To reduce the initial access delay, the maximum quantity of candidate SSBs needs to be reduced to 128. In this case, the network device may send configuration information to the terminal device, to indicate that a second maximum quantity of candidate SSBs is 128. The terminal device determines, based on the configuration information, that the maximum quantity of candidate SSBs for initial access is updated to the second maximum quantity of candidate SSBs, namely, 128. The terminal device performs initial access based on the second maximum quantity of candidate SSBs. According to the method provided in embodiments of this application, the maximum quantity of candidate SSBs is dynamically adjusted, that is, the maximum quantity of candidate SSBs is dynamically adjusted from 256 to 128, so that the initial access delay can be reduced.

The network device may send the configuration information to the terminal device by including the configuration information on the PBCH. The network device may alternatively send the configuration information to the terminal device by including the configuration information on a PDCCH or another common channel.

The PBCH carries an MIB message and a PBCH load message. To reduce overheads, a part of bits of the MIB message and/or a part of bits of the PBCH load message may be reused to indicate the maximum quantity of candidate SSBs, that is, a part of bits carried on the PBCH is reused to indicate the maximum quantity of candidate SSBs. For example, one or more of 4 bits [a̅_{*̅A̅*̅+4}, a̅_{*̅A̅*̅+5}, a̅_{*̅A̅*̅+6}, a̅_{*̅A̅*̅+7}] carried on the PBCH may be used to indicate the maximum quantity of candidate SSBs, where a̅_{*̅A̅*̅+4} is a half-frame bit carried on the PBCH, and a̅_{*̅A̅*̅+5}, a̅_{*̅A̅*̅+6}, and a̅_{*̅A̅*̅+7} are most significant bits of an SSB index carried on the PBCH. Alternatively, another bit carried on the PBCH may be used to indicate the maximum quantity of candidate SSBs. For specific content, refer to subsequent descriptions in embodiments of this application.

According to the method provided in embodiments of this application, the maximum quantity of candidate SSBs is dynamically adjusted. Therefore, an SSB index indication method also needs to be correspondingly adjusted. After obtaining the SSB index, the terminal device can select a corresponding SSB beam based on the SSB index for subsequent communication. The configuration message sent by the network device to the terminal device may include second indication information, to indicate the SSB index. To reduce overheads, a part of bits of the MIB message and/or a part of bits of the PBCH load message may also be reused to indicate the SSB index. In other words, a part of bits carried on the PBCH may be reused to indicate the SSB index. For example, the second indication information may include M bits, where a 1^{st} least significant bit (least significant bit, LSB), a 2^{nd} LSB, and a 3^{rd} LSB of the second indication information are represented by a demodulation reference signal (demodulation reference signal, DMRS) sequence carried on the PBCH, a 1^{st} most significant bit (most significant bit, MSB) to an (M-3)^{th} MSB of the second indication information are represented by a second bit carried on the PBCH, and the second bit may include one or more bits of a system frame number (system frame number, SFN) carried on the BCH and/or a half-frame bit carried on the PBCH.

The first indication information and the second indication information are related to a quantity of bits of the first indication information, a quantity of bits of the second indication information, and a pattern of the SSBs. For example, when the quantity of bits of the first indication information is 1 bit, the pattern of the SSBs is that there are eight candidate SSB locations within 20 milliseconds (millisecond, ms), and the quantity M of bits of the second indication information is 8 bits, the first indication information is represented as [Y], and 5 most significant bits of the second indication information are represented as [X3, X2, X1, a̅_{*̅A̅*̅+1}, a̅_{*̅A̅*̅+2}], where Y, X1, X2, and X3 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is a 3^{rd} LSB of the SFN carried on the PBCH, a̅_{*̅A̅*̅+2} is a 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, a̅_{*̅A̅*̅+7} are the most significant bits of the SSB index carried on the PBCH. According to the method, a part of bits, that is a̅_{*̅A̅*̅+1}, a̅_{*̅A̅*̅+2}, a̅_{*̅A̅*̅+4}, a̅_{*̅A̅*̅+5}, a̅_{*̅A̅*̅+6}, a̅_{*̅A̅*̅+7}, carried on the PBCH may be reused for the first indication information and the second indication information, reducing overheads. It should be understood that the first indication information and the second indication information may be alternatively represented in another method. For details, refer to subsequent descriptions in embodiments of this application.

The first indication information and the second indication information sent by the network device to the terminal device need to be scrambled, and the terminal device needs to perform descrambling to obtain the first indication information and the second indication information. Therefore, the first indication information and the second indication information may be related to a quantity of times of descrambling. The terminal device may obtain first-level unscrambled bits a̅_{*̅A̅*̅+1}, a̅_{*̅A̅*̅+2}, a̅_{*̅A̅*̅+4}, a̅_{*̅A̅*̅+5}, a̅_{*̅A̅*̅+6}, and a̅_{*̅A̅*̅+7} by performing descrambling once. If the terminal device requires that the first indication information and the second indication information can be obtained by performing descrambling only once, the first-level unscrambled bits a̅_{*̅A̅*̅+1}, a̅_{*̅A̅*̅+2}, a̅_{*̅A̅*̅+4}, a̅_{*̅A̅*̅+5}, a̅_{*̅A̅*̅+6}, and a̅_{*̅A̅*̅+7} may be reused for representation of the first indication information and the second indication information. If the terminal device has no requirement on the quantity of times of descrambling for obtaining the first indication information and the second indication information, more bits on the PBCH can be reused for the first indication information and the second indication information. For a specific representation method of first descrambling and second descrambling, refer to subsequent descriptions in embodiments of this application.

It should be understood that, in embodiments of this application, the "network device" and the "satellite" may be used interchangeably in this specification.

Refer to FIG. 2. FIG. 2 is a schematic flowchart of a communication method 200 according to an embodiment of this application. In FIG. 2, an example in which a network device and a terminal device are used as execution bodies for interaction is used to illustrate the method. However, the execution bodies for interaction are not limited in this application. For example, the network device in FIG. 2 may alternatively be a chip, a chip system, or a processor that supports the network device in implementing the method, or may be a logical module or software that can implement all or a part of functions of the network device. The terminal device in FIG. 2 may alternatively be a chip, a chip system, or a processor that supports the terminal device in implementing the method, or may be a logical module or software that can implement all or a part of functions of the terminal device. The communication method 200 includes but is not limited to the following steps.

S201: A terminal device receives configuration information from a network device, where the configuration information includes first indication information, and the first indication information indicates a maximum quantity of candidate SSBs. In a possible implementation, the terminal device may receive the configuration information from the network device over a common channel. The common channel may be a physical broadcast channel (physical broadcast channel, PBCH), a physical downlink control channel (physical downlink control channel, PDCCH), or another common channel.

In a possible implementation in which the first indication information indicates the maximum quantity of candidate SSBs, the first indication information may be bit information corresponding to the maximum quantity of candidate SSBs. For example, the maximum quantity of candidate SSBs includes 8, 64, 128, and 256. The first indication information may be 2 bits, to indicate the maximum quantity of candidate SSBs. The first information being 00 indicates that the maximum quantity of candidate SSBs is 8. The first indication information being 2 bits 01 indicates that the maximum quantity of candidate SSBs is 64. The first indication information being 10 indicates that the maximum quantity of candidate SSBs is 128. The first indication information being 11 indicates that the maximum quantity of candidate SSBs is 256. It should be understood that the foregoing description is merely an example of the first indication information. A specific quantity of bits used for the first indication information and how a specific bit corresponds to the maximum quantity of candidate SSBs are not limited in embodiments of this application.

In a possible implementation in which the first indication information indicates the maximum quantity of candidate SSBs, the first indication information may indicate the maximum quantity of candidate SSBs by indicating an index corresponding to the maximum quantity of candidate SSBs. For example, the maximum quantity of candidate SSBs includes 8, 64, 128, and 256, corresponding to indexes 1, 2, 3, and 4 respectively. When the first indication information is 1, 2, 3, and 4 respectively, it indicates that corresponding maximum quantities of candidate SSBs are 8, 64, 128, and 256 respectively. The indexes are in one-to-one correspondence with the maximum quantities of candidate SSBs.

In a possible implementation in which the first indication information indicates the maximum quantity of candidate SSBs, the first indication information may indicate different maximum quantities of candidate SSBs by using different values of some bits in a form of a preconfiguration table. In this manner, a quantity of bits occupied by the first indication information can be reduced, simplifying an implementation procedure.

For example, as shown in Table 1, Table 1 shows a relationship among a maximum quantity of candidate SSBs, an SSB periodicity, an index, and an indication bit.

**Table 1**

| Index | Indication bit | Maximum quantity of candidate SSBs | SSB periodicity |
|---|---|---|---|
| 1 | 0...00 | *L*_{*max*1} | *T*₁ |
| 2 | 0...01 | *L*_{*max*2} | *T*₂ |
| ... | ... | ... | ... |
| M | 0... | *L_{maxM}* | *T_{M}* |

As shown in Table 1, there are a total of M different maximum quantities of candidate SSBs. The maximum quantities of candidate SSBs are *L*_{*max*1}, *L*_{*max*1}, ... , and *L_{maxM}* respectively, and SSB periodicities corresponding to the M different maximum quantities of candidate SSBs are *T*₁, *T*₂, ..., and *T_{M}* respectively. The different maximum quantities of candidate SSBs have respective indexes and indication bits. The first indication information may be an indication bit. The terminal device queries, based on different indication bits that are received, Table 1 to determine a corresponding maximum quantity of candidate SSBs. It should be understood that Table 1 is merely an example. A form of Table 1 is not limited in embodiments of this application, and only several rows and/or several columns of Table 1 are used.

The parameters in Table 1 may be specific values. As shown in Table 2, Table 2 defines four cases, and supports an indication of four maximum quantities of candidate SSBs.

**Table 2**

| Index | Indication bit | Maximum quantity of candidate SSBs | SSB periodicity |
|---|---|---|---|
| 1 | 00 | 8 | 20 milliseconds (ms) |
| 2 | 01 | 64 | 160 ms |
| 3 | 10 | 128 | 320 ms |
| 4 | 11 | 256 | 640 ms |

In a possible implementation in which the first indication information indicates the maximum quantity of candidate SSBs, the first indication information may directly indicate the maximum quantity of candidate SSBs. For example, the first indication information may be 8, indicating that the maximum quantity of candidate SSBs is 8.

In a possible implementation in which the first indication information indicates the maximum quantity of candidate SSBs, the first indication information may indirectly indicate the maximum quantity of candidate SSBs by indicating an SSB periodicity. Because the maximum quantity of candidate SSBs corresponds to the SSB periodicity, the maximum quantity of candidate SSBs may be determined based on the SSB periodicity. For example, if the SSB periodicity indicated by the first indication information is 20 ms, it indicates that the maximum quantity of candidate SSBs is 8.

For ease of understanding, an example is used below for description.

In an NTN system, 256 SSB beams are needed by a satellite to cover an area. Due to continuous satellite launching, a quantity of satellites increases, and a coverage range that needs to be covered by a single satellite may reduce. Therefore, fewer beams may be required from a single satellite. For example, to reduce an initial access delay, the satellite reduces a quantity of SSB beams from 256 to 128. In this case, the terminal device does not know that the quantity of SSB beams has been reduced from 256 to 128. Therefore, the satellite sends the configuration information to the terminal device. The configuration information includes the first indication information, and the first indication information is 2 bits "10". The terminal device may determine, based on the first indication information, that the current quantity of SSBs is 128, and then perform subsequent processing based on the current quantity of SSBs.

In a possible implementation, a core network determines that the quantity of SSB beams needs to be changed. For example, the core network determines, based on a service change, that the quantity of SSB beams needs to be changed, and the core network may send a requirement for changing the quantity of SSB beams to the network device (the satellite).

In a possible implementation, the network device determines that the quantity of SSB beams needs to be changed. For example, the network device determines, based on a service change, that the quantity of SSB beams needs to be changed, and sends a changed quantity of SSB beams to the terminal device.

S202: The terminal device performs initial access based on the maximum quantity of candidate SSBs.

After determining the maximum quantity of candidate SSBs, the terminal device performs initial access based on the maximum quantity of candidate SSBs. For example, the terminal device updates an SSB search periodicity based on the maximum quantity of candidate SSBs, and performs a procedure such as searching for an SSB, a system information block 1 (system information block 1, SIB1), and a system information block 19 (system information block 19, SIB19) by using a new SSB search periodicity, to complete initial access.

For ease of understanding, the following uses an example for description. In the NTN system, the terminal device initially uses 256 SSB beams for initial access. In this case, a corresponding SSB search periodicity is 640 ms. When the terminal device receives the configuration information sent by the network device and determines, based on the configuration information, that the maximum quantity of candidate SSBs changes to 128, the terminal device performs initial access based on the maximum quantity of candidate SSBs. For example, the terminal device may update the SSB search periodicity to 320 ms based on the maximum quantity 128 of candidate SSBs, the terminal device performs SSB search based on the updated SSB search periodicity, and searches for the SSB, the system information block 1 (system information block 1, SIB1), and the system information block 19 (system information block 19, SIB19) SIB19 by using the new SSB search periodicity, till the initial access is completed.

According to the method provided in this embodiment of this application, the network device may send the configuration information to the terminal device, to dynamically adjust the maximum quantity of SSBs. Based on the method, the maximum quantity of SSBs can be dynamically adjusted, avoiding an increased initial access delay or even failed initial access due to SSB search based on a default scanning periodicity and failure to dynamically adjust the maximum quantity of SSBs.

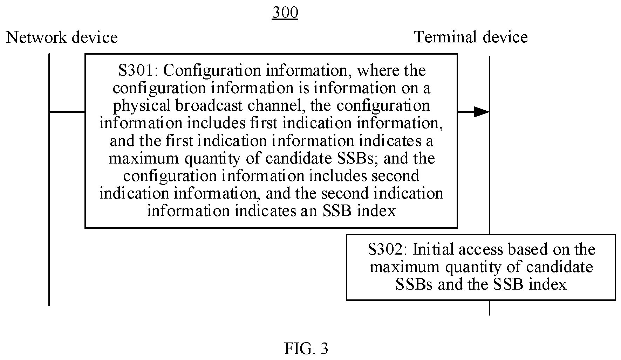

Based on the embodiment of this application corresponding to FIG. 2, refer to FIG. 3. FIG. 3 is a schematic flowchart of a communication method 300 according to an embodiment of this application. In FIG. 3, an example in which a network device and a terminal device are used as execution bodies for interaction is used to illustrate the method. However, the execution bodies for interaction are not limited in this application. For example, the network device in FIG. 3 may alternatively be a chip, a chip system, or a processor that supports the network device in implementing the method, or may be a logical module or software that can implement all or a part of functions of the network device. The terminal device in FIG. 3 may alternatively be a chip, a chip system, or a processor that supports the terminal device in implementing the method, or may be a logical module or software that can implement all or a part of functions of the terminal device. The communication method 300 includes but is not limited to the following steps.

S301: A terminal device receives configuration information from a network device, where the configuration information is information carried on a physical broadcast channel (physical broadcast channel, PBCH). The configuration information includes first indication information, and the first indication information indicates a maximum quantity of candidate SSBs. The configuration information further includes second indication information, and the second indication information indicates an SSB index.

In a possible implementation, the first indication information is represented by a part of bits carried on the PBCH. The PBCH carries MIB information and PBCH load information. Table 3 shows bits in the MIB information and the PBCH load information and functions of the bits.

**Table 3 Bit functions of MIB and PBCH load information**

| Bit | | Parameter | Description |
|---|---|---|---|
| MIB | 0 to 5 | 10-5 MSB of SFN | First 6 bits of the system frame number |
| | 6 | subCarrierSpacingCommon | Subcarrier spacing of a PDCCH that schedules an SIB1 and subcarrier spacing of the SIB 1 |
| | 7 to 10 | ssb-SubcarrierOffset | SSB subcarrier offset |
| | 11 | dmrs-TypeA-Position | Time domain position of a DMRS for the PDSCH carrying the SIB 1 |
| | 12 to 19 | pdcch-ConfigSIB 1 | PDCCH configuration related to the SIB 1 |
| | 20 | cellBarred | Indicator of whether access to a cell is barred |
| | 21 | intraFreqReselection | Indicates whether intra-frequency cell reselection is allowed |
| | 22 | spare | Reserved |
| PBCH payload | 23 | a̅*̅_̅{̅A̅}̅*̅ | 4^{th} LSB of the SFN |
| | 24 | a̅_{*̅A̅*̅+1} | 3^{rd} LSB of the SFN |
| | 25 | a̅_{*̅A̅*̅+2} | 2^{nd} LSB of the SFN |
| | 26 | a̅_{*̅A̅*̅+3} | 1^{st} LSB of the SFN |
| | 27 | a̅_{*̅A̅*̅+4} | Half-frame bit |
| | 28 | a̅_{*̅A̅*̅+5} | Most significant bits of an SSB index |
| | 29 | a̅_{*̅A̅*̅+6} | |
| | 30 | a̅_{*̅A̅*̅+7} | |

a̅*̅_̅{̅A̅}̅*̅ is the 4^{th} least significant bit (least significant bit, LSB) of the system frame number (system frame number, SFN) and changes once every 80 ms. a̅_{*̅A̅*̅+1} is the 3^{rd} LSB of the SFN and changes once every 40 ms. a̅_{*̅A̅*̅+2} is the 2^{nd} LSB of the SFN and changes once every 20 ms. a̅_{*̅A̅*̅+3} is the 1^{st} LSB of the SFN and changes once every 10 ms. a̅_{*̅A̅*̅+4} is the half-frame bit. a̅_{*̅A̅*̅+5}, a̅_{*̅A̅*̅+6}, and a̅_{*̅A̅*̅+7} are the most significant bits of the SSB index carried on the PBCH. Although each bit carried on the PBCH has a respective meaning, in a possible implementation, a part of bits carried on the PBCH may be reused to represent the first indication information, to avoid additional signaling for transmitting the first indication information, reducing overheads.

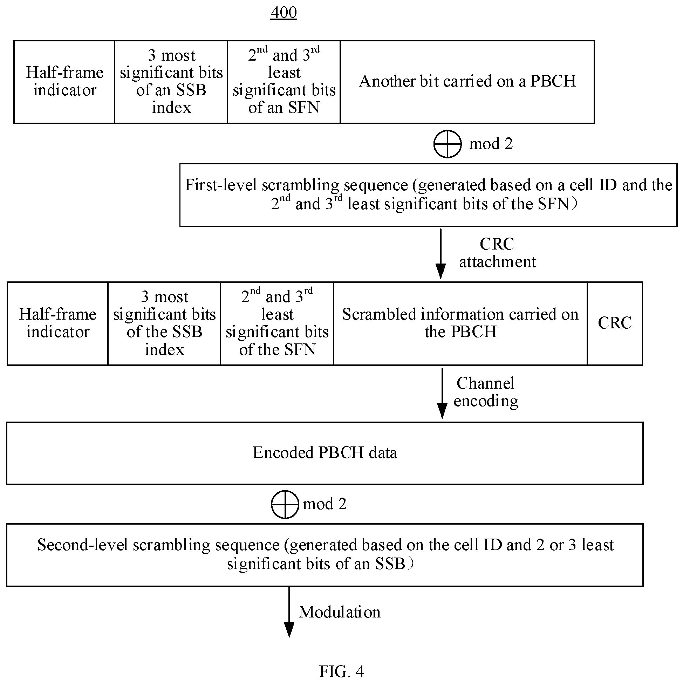

The MIB carried on the PBCH and bits of the PBCH load information need to be scrambled and encoded before transmission. Refer to FIG. 4. FIG. 4 shows a process of scrambling and encoding bit information carried on the PBCH. The scrambling includes two levels of scrambling, and first-level scrambling is generation based on a cell ID, the 2nd least significant bit a̅_{*̅A̅*̅+2} of the system frame number, and the 3rd least significant bit a̅_{*̅A̅*̅+1} of the system frame number. All PBCH bits other than a̅_{*̅A̅*̅+1}, a̅_{*̅A̅*̅+2}, a̅_{*̅A̅*̅+4}, and three most significant bits a̅_{*̅A̅*̅+5}, a̅_{*̅A̅*̅+6}, and a̅_{*̅A̅*̅+7} of the SSB index are scrambled by using the first-level scrambling sequence, and then CRC is attached to generate scrambled information carried on the PBCH. a̅_{*̅A̅*̅+1}, a̅_{*̅A̅*̅+2}, a̅_{*̅A̅*̅+4}, a̅_{*̅A̅*̅+5}, a̅_{*̅A̅*̅+6}, and a̅_{*̅A̅*̅+7} are used as first-level unscrambled bits. Channel encoding is performed on the first-level unscrambled bits a̅_{*̅A̅*̅+1}, a̅_{*̅A̅*̅+2}, a̅_{*̅A̅*̅+4}, a̅_{*̅A̅*̅+5}, a̅_{*̅A̅*̅+6}, and a̅_{*̅A̅*̅+7}, the scrambled information carried on PBCH, and the CRC as a whole, to generate encoded PBCH data. Second-level scrambling is performed on the encoded PBCH data by using a second-level scrambling sequence. The second-level scrambling sequence is generated by using the cell ID and 2 or 3 least significant bits of the SSB. Therefore, the terminal device can obtain the first-level unscrambled bits a̅_{*̅A̅*̅+1}, a̅_{*̅A̅*̅+2}, a̅_{*̅A̅*̅+4}, a̅_{*̅A̅*̅+5}, a̅_{*̅A̅*̅+6}, and a̅_{*̅A̅*̅+7} by performing descrambling once, and needs to perform descrambling twice to obtain other information carried on the PBCH.

In a possible implementation, the first indication information is represented by a first bit, and the first bit may include 1 bit, 2 bits, or 3 bits. When the first bit includes more bits, the first indication information can indicate more quantities of maximum candidate SSBs. When the first bit includes N bits, the first indication information may indicate 2*^{N}* different maximum quantities of candidate SSBs. When the first bit includes 1 bit, the first indication information may indicate two different maximum quantities of candidate SSBs. When the first bit includes 2 bits, the first indication information may indicate four different maximum quantities of candidate SSBs. When the first bit includes 3 bits, the first indication information may indicate eight different maximum quantities of candidate SSBs. The first bit may be one or more of bits [a̅_{*̅A̅*̅+4}, a̅_{*̅A̅*̅+5}, a̅_{*̅A̅*̅+6}, a̅_{*̅A̅*̅+7}] carried on the PBCH. a̅_{*̅A̅*̅+4} is a half-frame bit in terms of physical meaning and changes once every 5 ms. If the half-frame bit is reused, and the half-frame bit is used to represent the first indication information, the physical meaning of the bit remains unchanged. a̅_{*̅A̅*̅+5}, a̅_{*̅A̅*̅+6}, and a̅_{*̅A̅*̅+7} are most significant bits of the SSB index in terms of physical meaning. If a̅_{*̅A̅*̅+5}, a̅_{*̅A̅*̅+6}, and a̅_{*̅A̅*̅+7} are used to represent the first indication information, the physical meaning of a̅_{*̅A̅*̅+5}, a̅_{*̅A̅*̅+6}, and a̅_{*̅A̅*̅+7} changes, which are no longer most significant bits of the SSB index. In this way, the bits a̅_{*̅A̅*̅+5}, a̅_{*̅A̅*̅+6}, and a̅_{*̅A̅*̅+7} are reused.

In this embodiment of this application, a̅_{*̅A̅*̅+5}, a̅_{*̅A̅*̅+6}, and a̅_{*̅A̅*̅+7} that are originally used to indicate the SSB index may be reused to indicate the first indication information. Therefore, the indication of the SSB index needs to be redesigned.

In a possible implementation, the second indication information indicates the SSB index. The second indication information includes M bits, where a 1^{st} least significant bit (LSB), a 2^{nd} LSB, and a 3^{rd} LSB of the second indication information are represented by a demodulation reference signal (demodulation reference signal, DMRS) sequence carried on the PBCH, a 1^{st} most significant bit (most significant bit, MSB) to an (M-3)^{th} MSB of the second indication information are represented by a second bit carried on the PBCH, and the second bit includes a part of bits of the system frame number or a half-frame bit carried on the PBCH.

According to a first aspect, in this embodiment of this application, selection may be performed among bits that can be obtained by performing descrambling only once, that is, selection is performed among a̅_{*̅A̅*̅+1}, a̅_{*̅A̅*̅+2}, a̅_{*̅A̅*̅+4}, a̅_{*̅A̅*̅+5}, a̅_{*̅A̅*̅+6}, and a̅_{*̅A̅*̅+7}. These bits are reused to represent the first information and the 1^{st} MSB to the (M-3)^{th} MSB of the second information. In this way, the terminal device can obtain the maximum quantity of candidate SSBs and the SSB index information by performing descrambling only once, simplifying an SSB detection process.

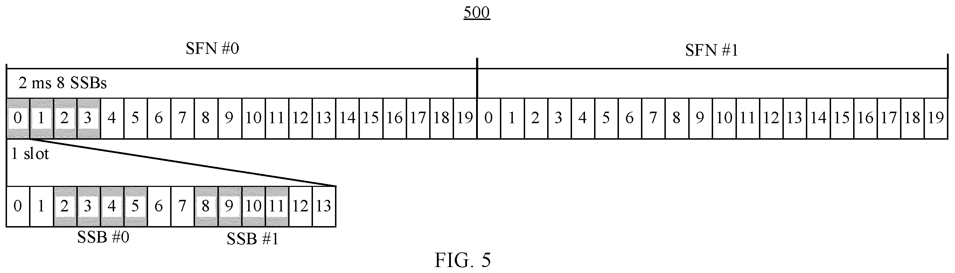

In a possible implementation, the first indication information and the second indication information are related to a quantity of bits of the first indication information, a quantity of bits of the second indication information, and a pattern of the SSBs. An SSB pattern defines an SSB sending status. As shown in FIG. 5, FIG. 5 shows a time domain slot structure of a 20 ms system frame when a subcarrier spacing is 30 kHz. In FIG. 5, an SSB pattern is that there are eight candidate SSB locations within 20 ms, and sending of the eight SSBs is centralized in slots 0 to 3 of a system frame number (system frame number, SFN) #0. Two SSBs are sent in each slot (each slot has two candidate SSB locations).

In a possible implementation, when the quantity of bits of the first indication information is 1 bit, the pattern of the SSBs is that there are eight candidate SSB locations within 20 ms, and the quantity M of bits of the second indication information is 8 bits, the first indication information is represented as [Y], and 5 most significant bits of the second indication information are represented as [X3, X2, X1, a̅_{*̅A̅*̅+1}, a̅_{*̅A̅*̅+2}], where Y, X1, X2, and X3 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

It should be understood that N most significant bits of the second indication information refer to the 1^{st} MSB to the N^{th} MSB in the bits of the second indication information.

For example, the first indication information is represented as [a̅_{*̅A̅*̅+4}], and the second indication information is [a̅_{*̅A̅*̅+5}, a̅_{*̅A̅*̅+6}, a̅_{*̅A̅*̅+7}, a̅_{*̅A̅*̅+1}, a̅_{*̅A̅*̅+2}, 3 bits represented by the DMRS sequence], including 8 bits in total. Because there are eight candidate SSB locations in the pattern of the SSBs within 20 ms, and a̅_{*̅A̅*̅+2} changes in a periodicity of 20 ms, a̅_{*̅A̅*̅+2} may be reused for the 4^{th} least significant bit of the second indication information. In addition, because a̅_{*̅A̅*̅+1} changes in a periodicity of 40 ms, a̅_{*̅A̅*̅+1} may be reused for the 5^{th} least significant bit of the second indication information. Most significant bits a̅_{*̅A̅*̅+5}, a̅_{*̅A̅*̅+6}, and a̅_{*̅A̅*̅+7} formerly used to represent the SSB index are still used to represent most significant bits of the SSB index. According to the method, the represented maximum quantity of candidate SSBs may be increased from a maximum of 64 to a maximum of 256, and the represented SSB index is increased from a maximum of 63 to a maximum of 255. In addition, bits carried on the PBCH are reused, to avoid additional signaling for transmitting the second indication information, reducing overheads.

For another example, the first indication information may be represented as [a̅_{*̅A̅*̅+5}], and the second indication information may be [a̅_{*̅A̅*̅+4}, a̅_{*̅A̅*̅+6}, a̅_{*̅A̅*̅+7}, a̅_{*̅A̅*̅+1}, a̅_{*̅A̅*̅+2}, 3 bits represented by the DMRS sequence].

For another example, the first indication information may be represented as [a̅_{*̅A̅*̅+6}], and the second indication information may be [a̅_{*̅A̅*̅+4}, a̅_{*̅A̅*̅+5}, a̅_{*̅A̅*̅+7}, a̅_{*̅A̅*̅+1}, a̅_{*̅A̅*̅+2}, 3 bits represented by the DMRS sequence].

That is, Y, X1, X2, and X3 are different bits in [a̅_{*̅A̅*̅+4}, a̅_{*̅A̅*̅+5}, a̅_{*̅A̅*̅+6}, a̅_{*̅A̅*̅+7}] carried on the PBCH.

In a possible implementation, when the quantity of bits of the first indication information is 1 bit, the pattern of the SSBs is that there are eight candidate SSB locations within 20 ms, and the quantity M of bits of the second indication information is 7 bits, the first indication information is represented as [Y], and 4 most significant bits of the second indication information are represented as [X2, X1, a̅_{*̅A̅*̅+1}, a̅_{*̅A̅*̅+2}], where Y, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, and a̅_{*̅A̅*̅+1} and a̅_{*̅A̅*̅+2} are bits carried on the PBCH.

In a possible implementation, when the quantity of bits of the first indication information is 1 bit, the pattern of the SSBs is that there are eight candidate SSB locations within 20 ms, and the quantity M of bits of the second indication information is 6 bits, the first indication information is represented as [Y], and 3 most significant bits of the second indication information are represented as [X1, a_{*A̅*+1}, a̅_{*̅A̅*̅+2}], where Y and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 1 bit, the pattern of the SSBs is that there are eight candidate SSB locations within 10 ms, and the quantity M of bits of the second indication information is 8 bits, the first indication information is represented as [Y], and 5 most significant bits of the second indication information are represented as [X3, X2, a_{*A̅*+1}, a_{*A̅*+2}, X1], where Y, X1, X2, and X3 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 1 bit, the pattern of the SSBs is that there are eight candidate SSB locations within 10 milliseconds (ms), and the quantity M of bits of the second indication information is 7 bits, the first indication information is represented as [Y], and 4 most significant bits of the second indication information are represented as [X2, a̅_{*̅A̅*̅+1}, a̅_{*̅A̅*̅+2}, X1], where Y, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 1 bit, the pattern of the SSBs is that there are eight candidate SSB locations within 10 milliseconds (ms), and the quantity M of bits of the second indication information is 6 bits, the first indication information is represented as [Y], and 3 most significant bits of the second indication information are represented as [a̅_{*̅A̅*̅+1}, a̅_{*̅A̅*̅+2}, X1], where Y and X1 are different bits in [a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 1 bit, the pattern of the SSBs is that there are eight candidate SSB locations within 5 milliseconds (ms), and the quantity M of bits of the second indication information is 8 bits, the first indication information is represented as [Y], and 5 most significant bits of the second indication information are represented as [X2, a̅_{*̅A̅*̅+1}, a̅_{*̅A̅*̅+2}, X1, a̅_{*̅A̅*̅+4}], where Y, X1, and X2 are different bits in [a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 1 bit, the pattern of the SSBs is that there are eight candidate SSB locations within 5 milliseconds (ms), and the quantity M of bits of the second indication information is 7 bits, the first indication information is represented as [Y], and 4 most significant bits of the second indication information are represented as [a̅_{*̅A̅*̅+1}, a̅_{*̅A̅*̅+2}, X1, a̅_{*̅A̅*̅+4}], where Y and X1 are different bits in [a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 1 bit, the pattern of the SSBs is that there are eight candidate SSB locations within 5 milliseconds (ms), and the quantity M of bits of the second indication information is 6 bits, the first indication information is represented as [Y], and 3 most significant bits of the second indication information are represented as [a̅_{*̅A̅*̅+2}, X1, a̅_{*̅A̅*̅+4}], where Y and X1 are different bits in [a̅_{*̅A̅*̅+5}, a̅_{*̅A̅*̅+6}, a̅_{*̅A̅*̅+7}] carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 20 milliseconds (ms), and the quantity M of bits of the second indication information is 7 bits, the first indication information is represented as [Y1, Y2], and 4 most significant bits of the second indication information are represented as [X2, X1, a̅_{*̅A̅*̅+1}, a̅_{*̅A̅*̅+2}], where Y1,Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 20 milliseconds (ms), and the quantity M of bits of the second indication information is 6 bits, the first indication information is represented as [Y1, Y2], and 3 most significant bits of the second indication information are represented as [X1, a̅_{*̅A̅*̅+1}, a̅_{*̅A̅*̅+2}], where Y1, Y2, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 10 milliseconds ms, and the quantity M of bits of the second indication information is 7 bits, the first indication information is represented as [Y1, Y2], and 4 most significant bits of the second indication information are represented as [X2, a̅_{*̅A̅*̅+1}, a̅_{*̅A̅*̅+2}, X1], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 10 ms, and the quantity M of bits of the second indication information is 6 bits, the first indication information is represented as [Y1, Y2], and 3 most significant bits of the second indication information are represented as [a̅_{*̅A̅*̅+1}, a̅_{*̅A̅*̅+2}, X1], where Y1,Y2, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 5 ms, and the quantity M of bits of the second indication information is 7 bits, the first indication information is represented as [Y1, Y2], and 4 most significant bits of the second indication information are represented as [a̅_{*̅A̅*̅+1}, a̅_{*̅A̅*̅+2}, X1, a̅_{*̅A̅*̅+4}], where Y1, Y2, and X1 are different bits in [a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 5 ms, and the quantity M of bits of the second indication information is 6 bits, the first indication information is represented as [Y1, Y2], and 3 most significant bits of the second indication information are represented as [a̅_{*̅A̅*̅+2}, X1, a̅_{*̅A̅*̅+4}], where Y1, Y2, and X1 are different bits in [a̅_{*̅A̅*̅+5}, a̅_{*̅A̅*̅+6}, a̅_{*̅A̅*̅+7}] carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 3 bits, the pattern of the SSBs is that there are eight candidate SSB locations within 20 ms, and the quantity M of bits of the second indication information is 6 bits, the first indication information is represented as [Y1, Y2, Y3], and 3 most significant bits of the second indication information are represented as [X1, a̅_{*̅A̅*̅+1}, a̅_{*̅A̅*̅+2}], where Y1, Y2, Y3, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

According to a second aspect, this embodiment of this application may not be limited to bits that can be obtained through descrambling once, that is, bits that can be reused and that are carried on the PBCH are used to indicate the maximum quantity of candidate SSBs and the SSB index information. In this way, bits carried on the PBCH can be fully used.

In a possible implementation, when the quantity of bits of the first indication information is 2 bits, the pattern of the SSBs is that there are eight candidate SSB locations within 20 milliseconds (ms), and the quantity M of bits of the second indication information is 8 bits, the first indication information is represented as [Y1, Y2], and 6 most significant bits of the second indication information are represented as [X2, X1, a̅*_̅{̅A̅}̅,* a̅_{*̅A̅*̅+1}, a̅_{A̅+2}], where Y1,Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is the 4^{th} LSB of the SFN carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 10 ms, and the quantity M of bits of the second indication information is 9 bits, the first indication information is represented as [Y1, Y2], and 6 most significant bits of the second indication information are represented as [X2, X1, a̅*_̅{̅A̅}̅,* a̅_{*̅A̅*̅+1}, a̅_{*̅A̅*̅+2}, a̅_{*A̅+*3}], where Y1, Y2, X1, and X2 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is the 4^{th} LSB of the SFN carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+3} is the 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 10 ms, and the quantity M of bits of the second indication information is 8 bits, the first indication information is represented as [Y1, Y2], and 5 most significant bits of the second indication information are represented as [X1, *a̅_̅{̅A̅}̅,* a̅_{*̅A̅*̅+1}, a̅_{*̅A̅*̅+2}, a̅_{*̅A̅*̅+3}], where Y1, Y2, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is the 4^{th} LSB of the SFN carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+3} is the 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 5 milliseconds ms, and the quantity M of bits of the second indication information is 9 bits, the first indication information is represented as [Y1, Y2], and 6 most significant bits of the second indication information are represented as [X1, a̅*̅_̅{̅A̅}̅*̅, a̅_{*̅A̅*̅+1}, a̅_{*̅A̅*̅+2}, a̅_{*̅A̅*̅+3}, a̅_{*̅A̅*̅+4}], where Y1, Y2, and X1 are different bits in [a̅_{*̅A̅*̅+5}, a̅_{*̅A̅*̅+6}, a̅_{*̅A̅*̅+7}] carried on the PBCH, a̅*̅_̅{̅A̅}̅*̅ is the 4^{th} LSB of the SFN carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+3} is the 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 2 bits, the pattern of the SSBs is that there are eight candidate SSB locations within 5 ms, and the quantity M of bits of the second indication information is 8 bits, the first indication information is represented as [Y1, Y2], and 5 most significant bits of the second indication information are represented as [X1, a̅_{*̅A̅*̅+1}, a̅_{*̅A̅*̅+2}, a̅_{*̅A̅*̅+3}, a̅_{*̅A̅*̅+4}], where Y1 and Y2 are different bits in [a̅_{*̅A̅*̅+5}, a̅_{*̅A̅*̅+6}, a̅_{*̅A̅*̅+7}] carried on the PBCH, X1 is a bit different from Y1 and Y2 in [a̅*̅_̅{̅A̅}̅*̅, a̅_{*̅A̅*̅+5}, a̅_{*̅A̅*̅+6}, a̅_{*̅A̅*̅+7}] carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+3} is the 1^{st} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, when the quantity of bits of the first indication information is 3 bits, the pattern of the SSBs is that there are eight candidate SSB locations within 20 ms, and the quantity M of bits of the second indication information is 7 bits, the first indication information is represented as [Y1, Y2, Y3], and 4 most significant bits of the second indication information are represented as [X1, a̅*̅_̅{̅A̅}̅*̅, a̅_{*̅A̅*̅+1}, a̅_{*̅A̅*̅+2}], where Y1, Y2, Y3, and X1 are different bits in [a̅_{*̅A̅*̅+4}, a̅_{*̅A̅*̅+5}, a̅_{*̅A̅*̅+6}, a̅_{*̅A̅*̅+7}] carried on the PBCH, a̅*̅_̅{̅A̅}̅*̅ is the 4^{th} LSB of the SFN carried on the PBCH, a̅_{*̅A̅*̅+1} is the 3^{rd} LSB of the SFN carried on the PBCH, a̅_{*̅A̅*̅+2} is the 2^{nd} LSB of the SFN carried on the PBCH, a̅_{*̅A̅*̅+4} is the half-frame bit carried on the PBCH, and a̅_{*̅A̅*̅+5}, a̅_{*̅A̅*̅+6}, and a̅_{*̅A̅*̅+7} are the most significant bits of the SSB index carried on the PBCH.

In a possible implementation, most significant bits of the system frame in the MIB may be reused to represent most significant bits of the SSB index, increasing a quantity of SSB indexes that can be supported.

S302: The terminal device performs initial access based on the maximum quantity of candidate SSBs and the SSB index.

After determining the maximum quantity of candidate SSBs and the SSB index, the terminal device performs initial access based on the maximum quantity of candidate SSBs and the SSB index. For example, the terminal device updates an SSB search periodicity based on the maximum quantity of candidate SSBs. The terminal device further determines a slot for system message search based on the determined SSB index, and then performs a procedure such as searching for an SSB, a system information block 1 (system information block 1, SIB1), and a system information block 19 (system information block 19, SIB19) SIB19 by using a new SSB search periodicity, to complete initial access.

In a possible implementation, the terminal device further receives an SSB set from the network device, where the SSB set includes a plurality of SSBs, and the terminal device selects, from the SSB set, an SSB that ranks earlier in time and that meets a first threshold for decoding. The first threshold may be signal energy of the SSB or signal quality of the SSB.

For example, if the SSB set received by the terminal device includes 256 SSBs, the terminal device may select 128 SSBs that rank earlier in time, and then select again, from the 128 SSBs, an SSB that meets the first threshold for decoding.

According to the method provided in this embodiment of this application, the network device may send the configuration information to the terminal device, and indicate the maximum quantity of candidate SSBs and the SSB index by reusing the bits carried on the PBCH, flexibly indicating different maximum quantities of candidate SSBs and SSB indexes. Based on the method, the maximum quantity of SSBs can be dynamically adjusted, avoiding an increased initial access delay or even failed initial access due to failure to dynamically adjust the maximum quantity of SSBs.

Corresponding to the method provided in the foregoing method embodiments, embodiments of this application further provide a corresponding apparatus, including corresponding modules configured to perform the foregoing embodiments. The module may be software, hardware, or a combination of software and hardware.

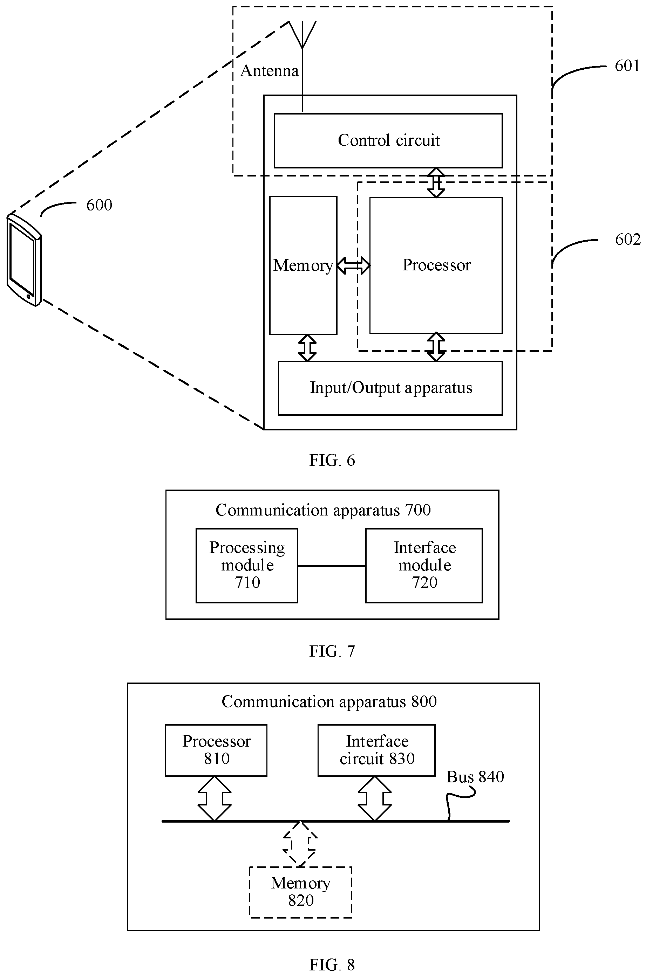

FIG. 6 is a diagram of a structure of a terminal device. The terminal is applicable to the scenario shown in FIG. 1. The terminal device or a component in the terminal device may perform the method 200, the method 300, and various possible implementations. For ease of description, FIG. 6 shows only main components of the terminal device. As shown in FIG. 6, the terminal device 600 includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of electromagnetic wave. The input/output apparatus, such as a touchscreen, a display, or a keyboard, is mainly configured to: receive data input by a user and output data to the user.

After the terminal device is powered on, the processor may read the software program in the storage unit, parse and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal device, the radio frequency circuit receives the radio frequency signal through the antenna. The radio frequency signal is further converted into a baseband signal, and the baseband signal is output to the processor. The processor converts the baseband signal into data, and processes the data.

For ease of description, FIG. 6 shows only one memory and one processor. An actual terminal may include a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 6 integrates functions of the baseband processor and the central processing unit. A person skilled in the art may understand that the baseband processor and the central processing unit may alternatively be processors independent of each other, and are interconnected by using a technology such as a bus. Persons skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of software program, and the processor executes the software program to implement a baseband processing function.

In an example, the antenna and the control circuit that have receiving and sending functions may be considered as a transceiver unit 601 of the terminal 600, and the processor having a processing function may be considered as a processing unit 602 of the terminal 600. As shown in FIG. 6, the terminal device 600 includes the transceiver unit 601 and the processing unit 602. The transceiver unit may also be referred to as a transceiver, a transceiver machine, a transceiver apparatus, or the like. Optionally, a component that is in the transceiver unit 601 and that is configured to implement a receiving function may be considered as a receiving unit, and a component that is in the transceiver unit 601 and that is configured to implement a sending function may be considered as a sending unit. In other words, the transceiver unit 601 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of units independent of each other. The receiving unit and the sending unit may be in one geographical position, or may be distributed in a plurality of geographical positions.

FIG. 7 is a block diagram of a communication apparatus according to an embodiment of this application. These communication apparatuses may be configured to implement a function of the system in the foregoing method embodiments, and therefore can also implement beneficial effects of the foregoing method embodiments. In embodiments of this application, the communication apparatus may be a terminal device, or may be a module (for example, a chip) used in the terminal device, or may be software that can implement all or a part of functions of the terminal device.

As shown in FIG. 7, the communication apparatus 700 includes a processing module 710 and an interface module 720. The communication apparatus 700 is configured to implement functions of the terminal device in the embodiments corresponding to FIG. 2 and FIG. 3.

When the communication apparatus 700 is configured to implement functions of the terminal device in the method embodiments shown in FIG. 2 and FIG. 3, in an example:
the interface module 720 is configured to receive configuration information from a network device, where the configuration information includes first indication information, and the first indication information indicates a maximum quantity of candidate SSBs.

In some possible implementations, the configuration information is information carried on a physical broadcast channel (PBCH), and the first indication information is represented by a part of bits carried on the PBCH.

In some possible implementations, the first indication information is represented by a first bit. The first bit includes 1 bit, 2 bits, or 3 bits, and the first bit is one or more of 4 bits [a̅_{*̅A̅*̅+4}, a̅_{*̅A̅*̅+5}, a̅_{*̅A̅*̅+6}, a̅_{*̅A̅*̅+7}] carried on the PBCH.

In some possible implementations, the configuration information further includes second indication information, and the second indication information indicates the SSB index. The second indication information includes M bits, where a 1^{st} LSB, a 2^{nd} LSB, and a 3^{rd} LSB of the second indication information are represented by a demodulation reference signal (DMRS) sequence carried on the PBCH, a 1^{st} MSB to an (M-3)^{th} MSB of the second indication information are represented by a second bit carried on the PBCH, and the second bit includes one or more bits of a system frame number and/or a half-frame bit carried on the PBCH.

In some possible implementations, the first indication information and the second indication information are related to a quantity of bits of the first indication information, a quantity of bits of the second indication information, and a pattern of the SSBs.

For specific manners of representing the first indication information and the second indication information, refer to related descriptions of S301. Details are not described herein again.

In some possible implementations, the interface module 720 is further configured to receive an SSB set from the network device, where the SSB set includes a plurality of SSBs.

The processing module 710 may be configured to perform initial access based on the maximum quantity of candidate SSBs.

The processing module 710 may be further configured to select, from the SSB set, an SSB that ranks earlier in time and that meets a first threshold for decoding.

The foregoing is merely some examples when the communication apparatus 700 is configured to implement functions of the terminal device in the method embodiments shown in FIG. 2 and FIG. 3. For functions of the processing module 710 and the interface module 720 in the communication apparatus 700, refer to the operations of the terminal device in the method embodiments shown in FIG. 2 and FIG. 3.

The communication apparatus 700 may be further configured to implement the functions of the network device in the method embodiments shown in FIG. 2 and FIG. 3. When the communication apparatus 700 is configured to implement functions of the network device in the method embodiments shown in FIG. 2 and FIG. 3, in an example:
the interface module 720 is configured to send configuration information, where the configuration information includes first indication information, the first indication information indicates a maximum quantity of candidate SSBs, and the maximum quantity of candidate SSBs is used for initial access.

In some possible implementations, the configuration information is information carried on a physical broadcast channel (PBCH), and the first indication information is represented by a part of bits carried on the PBCH.

In some possible implementations, the first indication information is represented by a first bit. The first bit includes 1 bit, 2 bits, or 3 bits, and the first bit is one or more of 4 bits [a̅_{*̅A̅*̅+4}, a̅_{*̅A̅*̅+5}, a̅_{*̅A̅*̅+6}, a̅_{*̅A̅*̅+7}] carried on the PBCH.

In some possible implementations, the configuration information further includes second indication information, and the second indication information indicates the SSB index. The second indication information includes M bits, where a 1^{st} LSB, a 2^{nd} LSB, and a 3^{rd} LSB of the second indication information are represented by a demodulation reference signal (DMRS) sequence carried on the PBCH, a 1^{st} MSB to an (M-3)^{th} MSB of the second indication information are represented by a second bit carried on the PBCH, and the second bit includes a part of bits of a system frame number or a half-frame bit carried on the PBCH.

In some possible implementations, the first indication information and the second indication information are related to a quantity of bits of the first indication information, a quantity of bits of the second indication information, and a pattern of the SSBs. For details, refer to functions of the network device in the method embodiments shown in FIG. 2 and FIG. 3. Details are not described herein again.

The foregoing is merely some examples when the communication apparatus 700 is configured to implement functions of the network device in the method embodiments shown in FIG. 2 and FIG. 3. For functions of the processing module 710 and the interface module 720 in the communication apparatus 700, refer to the operations of the network device in the method embodiments shown in FIG. 2 and FIG. 3.

FIG. 8 is another block diagram of a communication apparatus according to an embodiment of this application. As shown in FIG. 8, the communication apparatus 800 includes a processor 810 and an interface circuit 830. The processor 810 and the interface circuit 830 are coupled to each other. It may be understood that the interface circuit 830 may be a transceiver or an input/output interface.

Optionally, the communication apparatus 800 may further include a memory 820, configured to store instructions to be executed by the processor 820, store input data required for running the instructions by the processor 810, or store data generated after the processor 810 runs the instructions.

When the communication apparatus 800 is configured to implement functions of the terminal device or the network device shown in FIG. 2 and FIG. 3, the processor 810 is configured to implement a function of the processing module 710, and the interface circuit 830 is configured to implement a function of the interface module 720.

Optionally, the communication apparatus 800 further includes a bus 840. The processor 810, the interface circuit 830, and the memory 820 may communicate with each other through the bus 840.

An embodiment of this application further provides a system chip. The system chip includes an input/output interface, at least one processor, at least one memory, and a bus. The at least one memory is configured to store instructions, and the at least one processor is configured to invoke instructions in the at least one memory, to perform operations of the methods in the foregoing aspects.

When the apparatus is a chip used in a terminal, the chip in the terminal implements functions of the terminal in the foregoing method embodiments. The chip receives information from another module (for example, a radio frequency module or an antenna) in the terminal, where the information is from another terminal or a network device. Alternatively, the chip sends information to another module (for example, a radio frequency module or an antenna) in the terminal, where the information is sent by the terminal to another terminal or a network device.

When the communication apparatus is a chip used in a network device, the chip is configured to implement functions of the network device in the foregoing method embodiments. The chip receives information from another module (for example, a radio frequency module or an antenna) in the network device, where the information is from another network device or a terminal. Alternatively, the chip sends information to another module (for example, a radio frequency module or an antenna) in the network device, where the information is sent by the network device to another network device or a terminal.

A person of ordinary skill in the art may understand that various numbers such as first and second in this application are merely used for differentiation for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

All or some of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state disk, SSD)), or the like.

Steps of the methods described in embodiments of this application may be directly embedded into hardware, a software unit executed by the processor, or a combination thereof. The software unit may be stored in a random access memory (random access memory, RAM), a flash memory, a read-only memory (read-only memory, ROM), a register, a hard disk drive, a removable disk, or a storage medium in any other form in the art. For example, the storage medium may be connected to a processor so that the processor may read information from the storage medium and write information to the storage medium. Alternatively, the storage medium may be integrated into a processor. The processor and the storage medium may be disposed in an ASIC.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

For same or similar parts in embodiments of this application, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
receiving configuration information from a network device, wherein the configuration information comprises first indication information, and the first indication information indicates a maximum quantity of candidate synchronization/physical broadcast channel blocks SSBs; and
performing initial access based on the maximum quantity of candidate SSBs.

2. The method according to claim 1, wherein the configuration information is information carried on a physical broadcast channel PBCH, and the first indication information is represented by a part of bits carried on the PBCH.

3. The method according to claim 1 or 2, wherein the first indication information is represented by a first bit, the first bit comprises 1 bit, 2 bits, or 3 bits, the first bit is one or more of 4 bits [a̅_{*A̅*+4}, a̅_{*A̅*+5}, a̅_{*A̅*+6}, a̅_{*A̅*+7}] carried on the PBCH, a̅_{*A̅*+4} is a half-frame bit carried on the PBCH, and a̅_{*A̅*+5}, a̅_{*A̅*+6}, and a̅_{*A̅*+7} are most significant bits of an SSB index carried on the PBCH.

4. The method according to any one of claims 1 to 3, wherein the configuration information comprises second indication information, and the second indication information indicates the SSB index.

5. The method according to claim 4, wherein the second indication information comprises M bits, wherein a 1^{st} least significant bit LSB, a 2^{nd} LSB, and a 3^{rd} LSB of the second indication information are represented by a demodulation reference signal DMRS sequence carried on the PBCH, a 1^{st} most significant bit MSB to an (M-3)^{th} MSB of the second indication information are represented by a second bit carried on the PBCH, and the second bit comprises one or more bits of a system frame number SFN carried on the PBCH and/or a half-frame bit carried on the PBCH.

6. The method according to claim 5, wherein
the first indication information and the second indication information are related to a quantity of bits of the first indication information, a quantity of bits of the second indication information, and a pattern of the SSBs.

7. The method according to claim 6, wherein that the first indication information and the second indication information are related to a quantity of bits of the first indication information, a quantity of bits of the second indication information, and a pattern of the SSBs comprises:
when the quantity of bits of the first indication information is 1 bit, the pattern of the SSBs is that there are eight candidate SSB locations within 20 milliseconds ms, and the quantity M of bits of the second indication information is 8 bits, the first indication information is represented as [Y], and 5 most significant bits of the second indication information are represented as [X3, X2, X1, a̅_{*A̅*+1}, a̅_{*A̅*+2}], wherein Y, X1, X2, and X3 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 20 milliseconds ms, and the quantity M of bits of the second indication information is 7 bits, the first indication information is represented as [Y], and 4 most significant bits of the second indication information are represented as [X2, X1, a_{*A̅*+1}, a̅_{*A̅*+2}], wherein Y, X1, and X2 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 20 milliseconds ms, and the quantity M of bits of the second indication information is 6 bits, the first indication information is represented as [Y], and 3 most significant bits of the second indication information are represented as [X1, a_{*A̅*+1}, a̅_{*A̅*+2}], wherein Y and X1 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 10 milliseconds ms, and the quantity M of bits of the second indication information is 8 bits, the first indication information is represented as [Y], and 5 most significant bits of the second indication information are represented as [X3, X2, a̅_{*A̅*+1}, a_{*A̅*+2}, X1], wherein Y, X1, X2, and X3 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 10 milliseconds ms, and the quantity M of bits of the second indication information is 7 bits, the first indication information is represented as [Y], and 4 most significant bits of the second indication information are represented as [X2, a̅_{*A̅*+1}, a̅_{*A̅*+2}, X1], wherein Y, X1, and X2 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 10 milliseconds ms, and the quantity M of bits of the second indication information is 6 bits, the first indication information is represented as [Y], and 3 most significant bits of the second indication information are represented as [a̅_{*A̅*+1}, a̅_{*A̅*+2}, X1], wherein Y and X1 are different bits in [a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 5 milliseconds ms, and the quantity M of bits of the second indication information is 8 bits, the first indication information is represented as [Y], and 5 most significant bits of the second indication information are represented as [X2, a̅_{*A̅*+1}, a_{*A̅*+2}, X1, a̅_{*A̅*+4}], wherein Y, X1, and X2 are different bits in [a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 5 milliseconds ms, and the quantity M of bits of the second indication information is 7 bits, the first indication information is represented as [Y], and 4 most significant bits of the second indication information are represented as [a̅_{*A̅*+1}, a̅_{*A̅*+2}, X1, a̅_{*A̅*+4}], wherein Y and X1 are different bits in [a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH; or
when the quantity of bits of the first indication information is 1 bit, the pattern of the SSBs is that there are eight candidate SSB locations within 5 milliseconds ms, and the quantity M of bits of the second indication information is 6 bits, the first indication information is represented as [Y], and 3 most significant bits of the second indication information are represented as [a̅_{*A̅*+2}, X1, a̅_{*A̅*+4}], wherein Y and X1 are different bits in [a̅_{*A̅*+5}, a̅_{*A̅*+6}, a̅_{*A̅*+7}] carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH.

8. The method according to claim 6, wherein that the first indication information and the second indication information are related to a quantity of bits of the first indication information, a quantity of bits of the second indication information, and a pattern of the SSBs comprises:
when the quantity of bits of the first indication information is 2 bits, the pattern of the SSBs is that there are eight candidate SSB locations within 20 milliseconds ms, and the quantity M of bits of the second indication information is 8 bits, the first indication information is represented as [Y1, Y2], and 6 most significant bits of the second indication information are represented as [X2, X1, a̅*̅_̅{̅A̅}̅*̅, a̅_{*A̅*+1}, a̅_{*A̅*+2}], wherein Y1, Y2, X1, and X2 are different bits in [a̅_{*A̅*+4}, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+7} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 20 milliseconds ms, and the quantity M of bits of the second indication information is 7 bits, the first indication information is represented as [Y1, Y2], and 4 most significant bits of the second indication information are represented as [X2, X1, a̅_{*A̅+*1}, a̅_{*A̅*+2}], wherein Y1, Y2, X1, and X2 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 20 milliseconds ms, and the quantity M of bits of the second indication information is 6 bits, the first indication information is represented as [Y1, Y2], and 3 most significant bits of the second indication information are represented as [X1, a̅_{*A̅*+1}, a̅_{*A̅*+2}], wherein Y1, Y2, and X1 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 10 milliseconds ms, and the quantity M of bits of the second indication information is 9 bits, the first indication information is represented as [Y1, Y2], and 6 most significant bits of the second indication information are represented as [X2, X1, a̅*̅_̅{̅A̅}̅*̅, a̅_{*A̅*+1}, a̅_{*A̅*+2}, a̅_{*A̅*+3}], wherein Y1, Y2, X1, and X2 are different bits in [a̅_{*A̅*+4}, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+3} is a 1^{st} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 10 milliseconds ms, and the quantity M of bits of the second indication information is 8 bits, the first indication information is represented as [Y1, Y2], and 5 most significant bits of the second indication information are represented as [X1, a̅*_̅{̅A̅}̅,* a̅_{*A̅*+1}, a̅_{*A̅*+2}, a̅_{*A̅*+3}], wherein Y1, Y2, and X1 are different bits in [a̅_{*A̅*+4}, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+3} is a 1^{st} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 10 milliseconds ms, and the quantity M of bits of the second indication information is 7 bits, the first indication information is represented as [Y1, Y2], and 4 most significant bits of the second indication information are represented as [X2, a̅_{*A̅*+1}, a̅_{*A̅*+2}, X1], wherein Y1, Y2, X1, and X2 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 10 milliseconds ms, and the quantity M of bits of the second indication information is 6 bits, the first indication information is represented as [Y1, Y2], and 3 most significant bits of the second indication information are represented as [a̅_{*A̅*+1}, a̅_{*A̅*+2}, X1], wherein Y1, Y2, and X1 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 5 milliseconds ms, and the quantity M of bits of the second indication information is 9 bits, the first indication information is represented as [Y1, Y2], and 6 most significant bits of the second indication information are represented as [X1, a̅*̅_̅{̅A̅}̅*̅, a̅_{*A̅*+1}, a̅_{*A̅*+2}, a̅_{*A̅*+3}, a̅_{*A̅*+4}], wherein Y1, Y2, and X1 are different bits in [a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+3} is a 1^{st} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 5 milliseconds ms, and the quantity M of bits of the second indication information is 8 bits, the first indication information is represented as [Y1, Y2], and 5 most significant bits of the second indication information are represented as [X1, a̅_{*A̅*+1}, a̅_{*A̅*+2}, a̅_{*A̅*+3}, a̅_{*A̅*+4}], wherein Y1 and Y2 are different bits in [a̅_{*A̅*+5}, a̅_{*A̅*+6}, a̅_{*A̅*+7}] carried on the PBCH, X1 is a bit different from Y1 and Y2 in [a̅*̅_̅{̅A̅}̅*̅, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+3} is a 1^{st} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 5 milliseconds ms, and the quantity M of bits of the second indication information is 7 bits, the first indication information is represented as [Y1, Y2], and 4 most significant bits of the second indication information are represented as [a̅_{*A̅*+1}, a̅_{*A̅*+2}, X1, a̅_{*A̅*+4}], wherein Y1, Y2, and X1 are different bits in [a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH; or
when the quantity of bits of the first indication information is 2 bits, the pattern of the SSBs is that there are eight candidate SSB locations within 5 milliseconds ms, and the quantity M of bits of the second indication information is 6 bits, the first indication information is represented as [Y1, Y2], and 3 most significant bits of the second indication information are represented as [a̅_{*A̅*+2}, X1, a̅_{*A̅*+4}], wherein Y1, Y2, and X1 are different bits in [a̅_{*A̅*+5}, a̅_{*A̅*+6}, a̅_{*A̅*+7}] carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH.

9. The method according to claim 6, wherein that the first indication information and the second indication information are related to a quantity of bits of the first indication information, a quantity of bits of the second indication information, and a pattern of the SSBs comprises:
when the quantity of bits of the first indication information is 3 bits, the pattern of the SSBs is that there are eight candidate SSB locations within 20 milliseconds ms, and the quantity M of bits of the second indication information is 7 bits, the first indication information is represented as [Y1, Y2, Y3], and 4 most significant bits of the second indication information are represented as [X1, a̅*̅_̅{̅A̅}̅*̅, a̅_{*A̅*+1}, a̅_{*A̅*+2}], wherein Y1, Y2, Y3, and X1 are different bits in [a̅_{*A̅*+4}, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, a̅_{*A̅*+7} are the most significant bits of the SSB index carried on the PBCH; or
when the quantity of bits of the first indication information is 3 bits, the pattern of the SSBs is that there are eight candidate SSB locations within 20 milliseconds ms, and the quantity M of bits of the second indication information is 6 bits, the first indication information is represented as [Y1, Y2, Y3], and 3 most significant bits of the second indication information are represented as [X1, a̅_{*A̅*+1}, a̅_{*A̅*+2}], wherein Y1, Y2, Y3, and X1 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH.

10. The method according to any one of claims 1 to 9, wherein the performing initial access based on the maximum quantity of candidate SSBs comprises:
performing initial access based on a first maximum quantity of candidate SSBs;
determining a second maximum quantity of candidate SSBs based on the first indication information; and
performing initial access based on the second maximum quantity of candidate SSBs.

11. The method according to claim 10, wherein the determining a second maximum quantity of candidate SSBs based on the first indication information comprises:
determining the second maximum quantity of candidate SSBs through first descrambling or second descrambling.

12. The method according to any one of claims 1 to 11, wherein the method further comprises:
receiving an SSB set from the network device, wherein the SSB set comprises a plurality of SSBs, and selecting, from the SSB set, an SSB that ranks earlier in time and that meets a first threshold for decoding.

13. A communication method, comprising:
sending configuration information, wherein the configuration information comprises first indication information, the first indication information indicates a maximum quantity of candidate synchronization/physical broadcast channel blocks SSBs, and the maximum quantity of candidate SSBs is used for initial access.

14. The method according to claim 13, wherein the configuration information is information carried on a physical broadcast channel PBCH, and the first indication information is represented by a part of bits carried on the PBCH.

15. The method according to claim 13 or 14, wherein the first indication information is represented by a first bit, the first bit comprises 1 bit, 2 bits, or 3 bits, the first bit is one or more of 4 bits [a̅_{*A̅*+4}, a̅_{*A̅*+5}, a̅_{*A̅*+6}, a̅_{*A̅*+7}] carried on the PBCH, a̅_{*A̅*+4} is a half-frame bit carried on the PBCH, and a̅_{*A̅*+5}, a̅_{*A̅*+6}, and a̅_{*A̅*+7} are most significant bits of an SSB index carried on the PBCH.

16. The method according to any one of claims 13 to 15, wherein the configuration information comprises second indication information, and the second indication information indicates the SSB index.

17. The method according to claim 16, wherein the second indication information comprises M bits, wherein a 1^{st} least significant bit LSB, a 2^{nd} LSB, and a 3^{rd} LSB of the second indication information are represented by a demodulation reference signal DMRS sequence carried on the PBCH, a 1^{st} most significant bit MSB to an (M-3)^{th} MSB of the second indication information are represented by a second bit carried on the PBCH, and the second bit comprises one or more bits of a system frame number SFN carried on the PBCH and/or a half-frame bit carried on the PBCH.

18. The method according to claim 17, wherein
the first indication information and the second indication information are related to a quantity of bits of the first indication information, a quantity of bits of the second indication information, and a pattern of the SSBs.

19. The method according to claim 18, wherein that the first indication information and the second indication information are related to a quantity of bits of the first indication information, a quantity of bits of the second indication information, and a pattern of the SSBs comprises:
when the quantity of bits of the first indication information is 1 bit, the pattern of the SSBs is that there are eight candidate SSB locations within 20 milliseconds ms, and the quantity M of bits of the second indication information is 8 bits, the first indication information is represented as [Y], and 5 most significant bits of the second indication information are represented as [X3, X2, X1, a̅_{*A̅*+1}, a̅_{*A̅*+2}], wherein Y, X1, X2, and X3 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 20 milliseconds ms, and the quantity M of bits of the second indication information is 7 bits, the first indication information is represented as [Y], and 4 most significant bits of the second indication information are represented as [X2, X1, a_{*A̅*+1}, a̅_{*A̅*+2}], wherein Y, X1, and X2 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 20 milliseconds ms, and the quantity M of bits of the second indication information is 6 bits, the first indication information is represented as [Y], and 3 most significant bits of the second indication information are represented as [X1, a_{*A̅*+1}, a̅_{*A̅*+2}], wherein Y and X1 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, a̅_{*A̅*+7} are the most significant bits of the SSB index carried on the PBCH;
when the quantity of bits of the first indication information is 1 bit, the pattern of the SSBs is that there are eight candidate SSB locations within 10 milliseconds ms, and the quantity M of bits of the second indication information is 8 bits, the first indication information is represented as [Y], and 5 most significant bits of the second indication information are represented as [X3, X2, a_{*A̅*+1}, a_{*A̅*+2}, X1], wherein Y, X1, X2, and X3 are different bits in [a̅_{*A̅*+4}, a̅_{*A̅*+5}, a̅_{*A̅*+6}, a̅_{*A̅*+7}] carried on the PBCH, a̅_{*A̅*+4} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 10 milliseconds ms, and the quantity M of bits of the second indication information is 7 bits, the first indication information is represented as [Y], and 4 most significant bits of the second indication information are represented as [X2, a̅_{*A̅*+1}, a̅_{*A̅*+2}, X1], wherein Y, X1, and X2 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 10 milliseconds ms, and the quantity M of bits of the second indication information is 6 bits, the first indication information is represented as [Y], and 3 most significant bits of the second indication information are represented as [a̅_{*A̅*+1}, a̅_{*A̅*+2}, X1], wherein Y and X1 are different bits in [a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 5 milliseconds ms, and the quantity M of bits of the second indication information is 8 bits, the first indication information is represented as [Y], and 5 most significant bits of the second indication information are represented as [X2, a̅_{*A̅*+1}, a̅_{*A̅*+2}, X1, a̅_{*A̅*+4}], wherein Y, X1, and X2 are different bits in [a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 1 bit, the pattern of the SSBs is that there are eight candidate SSB locations within 5 milliseconds ms, and the quantity M of bits of the second indication information is 7 bits, the first indication information is represented as [Y], and 4 most significant bits of the second indication information are represented as [a̅_{*A̅*+1}, a̅_{*A̅*+2}, X1, a̅_{*A̅*+4}], wherein Y and X1 are different bits in [a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH; or
when the quantity of bits of the first indication information is 1 bit, the pattern of the SSBs is that there are eight candidate SSB locations within 5 milliseconds ms, and the quantity M of bits of the second indication information is 6 bits, the first indication information is represented as [Y], and 3 most significant bits of the second indication information are represented as [a̅_{*A̅*+2}, X1, a̅_{*A̅*+4}], wherein Y and X1 are different bits in [a̅_{*A̅*+5}, a̅_{*A̅*+6}, a̅_{*A̅*+7}] carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH.

20. The method according to claim 18, wherein that the first indication information and the second indication information are related to a quantity of bits of the first indication information, a quantity of bits of the second indication information, and a pattern of the SSBs comprises:
when the quantity of bits of the first indication information is 2 bits, the pattern of the SSBs is that there are eight candidate SSB locations within 20 milliseconds ms, and the quantity M of bits of the second indication information is 8 bits, the first indication information is represented as [Y1, Y2], and 6 most significant bits of the second indication information are represented as [X2, X1, a̅*̅_̅{̅A̅}̅*̅, a̅_{*A̅*+1}, a̅_{*A̅*+2}], wherein Y1, Y2, X1, and X2 are different bits in [a̅_{*A̅*+4}, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 20 milliseconds ms, and the quantity M of bits of the second indication information is 7 bits, the first indication information is represented as [Y1, Y2], and 4 most significant bits of the second indication information are represented as [X2, X1, a̅_{*A̅*+1}, a̅_{*A̅*+2}], wherein Y1, Y2, X1, and X2 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 20 milliseconds ms, and the quantity M of bits of the second indication information is 6 bits, the first indication information is represented as [Y1, Y2], and 3 most significant bits of the second indication information are represented as [X1, a̅_{*A̅*+1}, a̅_{*A̅*+2}], wherein Y1, Y2, and X1 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 10 milliseconds ms, and the quantity M of bits of the second indication information is 9 bits, the first indication information is represented as [Y1, Y2], and 6 most significant bits of the second indication information are represented as [X2, X1, a̅*̅_̅{̅A̅}̅*̅, a̅_{*A̅*+1}, a̅_{*A̅*+2}, a̅_{*A̅*+3}], wherein Y1, Y2, X1, and X2 are different bits in [a̅_{*A̅*+4}, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+3} is a 1^{st} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 10 milliseconds ms, and the quantity M of bits of the second indication information is 8 bits, the first indication information is represented as [Y1, Y2], and 5 most significant bits of the second indication information are represented as [X1, a̅_{*A̅*+4} a̅_{*A̅*+1}, a̅_{*A̅*+2}, a̅_{*A̅*+3}], wherein Y1, Y2, and X1 are different bits in [a̅_{*A̅*+4}, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+3} is a 1^{st} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 10 milliseconds ms, and the quantity M of bits of the second indication information is 7 bits, the first indication information is represented as [Y1, Y2], and 4 most significant bits of the second indication information are represented as [X2, a̅_{*A̅+*1}, a̅_{*A̅*+2}, X1], wherein Y1, Y2, X1, and X2 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 10 milliseconds ms, and the quantity M of bits of the second indication information is 6 bits, the first indication information is represented as [Y1, Y2], and 3 most significant bits of the second indication information are represented as [a̅_{*A̅*+1}, a̅_{*A̅*+2}, X1], wherein Y1, Y2, and X1 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 5 milliseconds ms, and the quantity M of bits of the second indication information is 9 bits, the first indication information is represented as [Y1, Y2], and 6 most significant bits of the second indication information are represented as [X1, a̅*̅_̅{̅A̅}̅*̅, a̅_{*A̅*+1}, a̅_{*A̅*+2}, a̅_{*A̅*+3}, a̅_{*A̅*+4}], wherein Y1, Y2, and X1 are different bits in [a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+3} is a 1^{st} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 5 milliseconds ms, and the quantity M of bits of the second indication information is 8 bits, the first indication information is represented as [Y1, Y2], and 5 most significant bits of the second indication information are represented as [X¹, a̅_{*A̅*+1}, a̅_{*A̅*+2}, a̅_{*A̅*+3}, a̅_{*A̅*+4}], wherein Y1 and Y2 are different bits in [a̅_{*A̅*+5}, a̅_{*A̅*+6}, a̅_{*A̅*+7}] carried on the PBCH, X1 is a bit different from Y1 and Y2 in [a̅*̅_̅{̅A̅}̅*̅, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+3} is a 1^{st} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH;
when the quantity of bits of the first indication information is 2 bits, the pattern of the SSBs is that there are eight candidate SSB locations within 5 milliseconds ms, and the quantity M of bits of the second indication information is 7 bits, the first indication information is represented as [Y1, Y2], and 4 most significant bits of the second indication information are represented as [a̅_{*A̅*+1}, a̅_{*A̅*+2}, X1, a̅_{*A̅*+4}], wherein Y1, Y2, and X1 are different bits in [a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH; or
when the quantity of bits of the first indication information is 2 bits, the pattern of the SSBs is that there are eight candidate SSB locations within 5 milliseconds ms, and the quantity M of bits of the second indication information is 6 bits, the first indication information is represented as [Y1, Y2], and 3 most significant bits of the second indication information are represented as [a̅_{*A̅*+2}, X1, a̅_{*A̅*+4}], wherein Y1, Y2, and X1 are different bits in [a̅_{*A̅*+5}, a̅_{*A̅*+6}, a̅_{*A̅*+7}] carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH.

21. The method according to claim 18, wherein that the first indication information and the second indication information are related to a quantity of bits of the first indication information, a quantity of bits of the second indication information, and a pattern of the SSBs comprises:
when the quantity of bits of the first indication information is 3 bits, the pattern of the SSBs is that there are eight candidate SSB locations within 20 milliseconds ms, and the quantity M of bits of the second indication information is 7 bits, the first indication information is represented as [Y1, Y2, Y3], and 4 most significant bits of the second indication information are represented as [X1, a̅*̅_̅{̅A̅}̅*̅, a̅_{*A̅*+1}, a̅_{*A̅*+2}], wherein Y1, Y2, Y3, and X1 are different bits in [a̅_{*A̅*+4}, a̅_{*A̅*+5}, a̅_{*A̅*+6}, a̅_{*A̅*+7}] carried on the PBCH, a̅*̅_̅{̅A̅}̅*̅ is a 4^{th} LSB of the SFN carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH; or
when the quantity of bits of the first indication information is 3 bits, the pattern of the SSBs is that there are eight candidate SSB locations within 20 milliseconds ms, and the quantity M of bits of the second indication information is 6 bits, the first indication information is represented as [Y1, Y2, Y3], and 3 most significant bits of the second indication information are represented as [X1, a̅_{*A̅*+1}, a̅_{*A̅*+2}], wherein Y1, Y2, Y3, and X1 are different bits in [a̅_{*A̅*+4}, a̅_{*A̅*+5}, a̅_{*A̅*+6}, a̅_{*A̅*+7}] carried on the PBCH, a̅_{*A̅*+1} is a 3^{rd} LSB of the SFN carried on the PBCH, a̅_{*A̅*+2} is a 2^{nd} LSB of the SFN carried on the PBCH, a̅_{*A̅*+4} is the half-frame bit carried on the PBCH, and a̅_{*A̅*+5}, a̅_{*A̅*+6}, and a̅_{*A̅*+7} are the most significant bits of the SSB index carried on the PBCH.

22. A communication apparatus, comprising a communication unit and a processing unit, wherein
the communication unit is configured to input and/or output signaling or data; and
the processing unit is configured to perform, via the communication unit, the method according to any one of claims 1 to 12, or the method according to any one of claims 13 to 21.

23. A communication apparatus, comprising a communication interface and a processor, wherein
the communication interface is configured to input and/or output signaling or data; and
the processor is configured to execute a computer-executable program, to cause the method according to any one of claims 1 to 12 to be performed, or cause the method according to any one of claims 13 to 21 to be performed.

24. A communication apparatus, comprising a processor and a memory, wherein
the memory is configured to store a computer program or instructions; and
the processor is configured to execute the computer program or the instructions in the memory, to cause the method according to any one of claims 1 to 12 to be performed, or cause the method according to any one of claims 13 to 21 to be performed.

25. A computer-readable storage medium, wherein the computer-readable storage medium stores computer-executable instructions, and when the computer-executable instructions are invoked by a computer, the method according to any one of claims 1 to 12 is performed, or the method according to any one of claims 13 to 21 is performed.

26. A chip system, comprising a communication interface and a processor, wherein
the communication interface is configured to input and/or output signaling or data; and
the processor is configured to execute a computer-executable program, to cause a device on which the chip system is installed to perform the method according to any one of claims 1 to 12, or perform the method according to any one of claims 13 to 21.

27. A communication system, comprising communication apparatus configured to perform the method according to any one of claims 1 to 12.
